(19) Europäisches Patentamt
European Patent Office
Office européen des brevets

(11) **EP 3 328 800 B1**

(12) **EUROPEAN PATENT SPECIFICATION**

(45) Date of publication and mention of the grant of the patent:
**26.01.2022   Bulletin 2022/04**

(21) Application number: **16831396.3**

(22) Date of filing: **29.07.2016**

(51) International Patent Classification (IPC):
**C02F 5/10** *(2006.01)*          **C02F 5/12** *(2006.01)*
**C08F 220/56** *(2006.01)*       **C08F 220/06** *(2006.01)*
**C08F 220/02** *(2006.01)*       **C02F 5/08** *(2006.01)*
**C02F 1/68** *(2006.01)*          C02F 103/06 *(2006.01)*
C02F 103/02 *(2006.01)*       C02F 103/08 *(2006.01)*
C02F 103/10 *(2006.01)*       C02F 103/28 *(2006.01)*

(52) Cooperative Patent Classification (CPC):
(C-Sets available)
**C02F 1/68; C02F 5/12; C08F 220/06;**
C02F 2103/023; C02F 2103/06; C02F 2103/08;
C02F 2103/10; C02F 2103/28          (Cont.)

(86) International application number:
**PCT/US2016/044645**

(87) International publication number:
**WO 2017/019937 (02.02.2017 Gazette 2017/05)**

(54) **SCALE INHIBITING POLYMER MIXTURES AND METHODS OF USING THE SAME**

KESSELSTEINHEMMENDE POLYMERMISCHUNGEN UND VERFAHREN ZUR VERWENDUNG DAVON

MÉLANGES POLYMÈRES INHIBANT LE TARTRE ET LEURS MÉTHODES D'UTILISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **29.07.2015   US 201562198612 P**

(43) Date of publication of application:
**06.06.2018   Bulletin 2018/23**

(73) Proprietor: **Ecolab USA Inc.**
**St. Paul, MN 55102 (US)**

(72) Inventors:
• **GILL, Jasbir**
**Naperville, Illinois 60563-1198 (US)**
• **BANERJEE, Santanu**
**Pune**
**Maharashtra 411028 (IN)**
• **CHUDOMEL, John**
**Naperville, Illinois 60563-1198 (US)**

(74) Representative: **Godemeyer Blum Lenze**
**Patentanwälte**
**Partnerschaft mbB - werkpatent**
**An den Gärten 7**
**51491 Overath (DE)**

(56) References cited:
WO-A1-2013/019627     US-A- 3 928 196
US-A- 3 928 196       US-A- 4 640 793
US-A1- 2003 173 303   US-B1- 6 645 384

EP 3 328 800 B1

(52) Cooperative Patent Classification (CPC): (Cont.)

C-Sets
**C08F 220/06, C08F 220/585, C08F 220/02,
C08F 220/54**

## Description

The present invention relates to polymer compositions and aqueous mixtures of the same for use as scale inhibitors. The polymer compositions herein inhibit scale formation in water containing systems in relatively low concentrations.

## BACKGROUND

Cooling systems, desalination, or other water containing systems can become less efficient over time due to deposition of mineral scales or other hard water impurities in the water circulating through the system. Scales can deposit on the surfaces of the system that contact the water. Such scales may come from dissolved solids such as anionic and/or cationic components in the water source. For example, sea water has a high amount of scale causing calcium ions and carbonate ions compared to freshwater. Water containing systems utilizing sea water often undergo heavy scaling as the sea water is thermally shocked or concentrated, and must be cleaned or otherwise cleared of such scaling (e.g., calcium carbonate, calcium sulfate, iron and manganese based deposits or scales) to efficiently function. Typically, at higher temperatures such as above 50 or 80 degrees Celsius and/or at higher concentrations cause by evaporation, certain scales form more readily. Thus, systems operating at high temperatures may undergo faster or more extensive scale deposition than systems operating at ambient temperatures.

Scale deposition can be limited by using a scale inhibiting agent in the water circulating through the system. Typically, such scale inhibiting agents include phosphorous containing components, such as phosphates or phosphonates. Such phosphorous containing components may not be desirable if the water is going to be discharged from the system, because phosphorous containing components can foul water sources and surfaces that come in contact with the same, often causing unwanted or harmful blooms of algae or other plant life.

Coastal or isolated areas may not have a ready supply of water having low total dissolved solids (e.g., less than about 4000 ppm) for circulation through some water containing systems. Even freshwater may be recirculated through a water containing system only a limited number of times before the TDS content therein concentrates to a point where scale deposition takes place. However, replacement freshwater may not be a readily available resource. As long as water having low amounts of total dissolved solids is in relatively short supply, users of systems requiring water, such as desalination, cooling, pulp processing, ware-washing, laundry, etc., will continue to search for means of efficiently using the water sources on hand, such as high TDS (e.g., over 4,000 ppm) water sources. Some relevant prior art documents to be mentioned are: US 3 928 196 A, US 2003/173303 A1, WO 2013/019627 A1, US 6 645 384 B1.

Thus, there is a substantial need in the industry for polymer compositions that are suitable for use as scale inhibitors in water containing systems.

## SUMMARY

A polymer mixture, a method of inhibiting scale formation using said mixture and the use of said mixture are provided in independent claims 1, 7 and 12 respectively. These claims comprise the essential features of the invention. Further, preferred embodiments are described in dependent claims 2-6, 8-11. In an aspect, a scale inhibiting polymer mixture is disclosed. The scale inhibiting polymer mixture comprises a water source and about 0.05 ppm to about 200 ppm of a polymer composition. The polymer composition comprises about 50 mol% to about 99 mol% of a first monomer comprising a carboxylic acid residue. The polymer composition further comprises about 0.01 mol% to about 45 mol% of a second monomer comprising one of a sulfonated acid residue or a second carboxylic acid residue, wherein the first monomer is chemically different from the second monomer.

In an aspect, a polymer composition is disclosed. The polymer composition comprises plurality of monomers, the plurality of monomers including three, four, or five monomers. The plurality of monomers comprises about 90 mol% to about 97 mol% of a first monomer comprising a residue of one of acrylic acid, a salt thereof, or a conjugate base thereof; maleic acid, a salt thereof, or a conjugate base thereof; or methacrylic acid, a salt thereof, or a conjugate base thereof. The plurality of monomers comprises about 0.01 mol% to about 5 mol% of a second monomer comprising a residue of one of 2-acrylamido-2-methylpropane sulfonic acid, a salt thereof, or a conjugate base thereof; maleic acid, a salt thereof, or a conjugate base thereof; methacrylic acid, a salt thereof, or a conjugate base thereof; or sulfostyrene, wherein the first monomer is chemically different from the second monomer. The plurality of monomers comprises about 0.01 mol% to about 5 mol% of a third monomer, the third monomer comprising a residue of one of 2-acrylamido-2-methylpropane sulfonic acid, a salt thereof, or a conjugate base thereof; itaconic acid, a salt thereof, or a conjugate base thereof; crotonic acid, a salt thereof, or a conjugate base thereof; tert-butylacrylamide, a salt thereof, or a conjugate base thereof; or dimethylacrylamide, a salt thereof, or a conjugate base thereof; and wherein the third monomer is chemically different from the first monomer and the second monomer.

A method of inhibiting scale formation in water containing systems is disclosed. The method comprises adding about 0.05 ppm to 1000 ppm of a scale inhibiting polymer composition to a water source to form a scale inhibiting polymer mixture. The scale inhibiting polymer composition comprises about 55 mol% to about 99 mol% of a first monomer and the first monomer comprises a residue of one of a carboxylic acid or a conjugate base thereof. The scale inhibiting polymer composition comprises about 0.01 mol% to about 45 mol% of a second monomer comprising of a residue of one of a sulfonated acid or a conjugate base thereof, or a second carboxylic acid or a conjugate base thereof, wherein the first monomer is chemically different from the second monomer. The method includes applying the scale inhibiting polymer mixture to a water containing system.

A water containing system is disclosed. The water containing system includes the scale inhibiting polymer mixture of disclosed above therein, in a concentration of less than about 20 ppm.

Additional advantages and novel features of the invention will be set forth in part in the description that follows, and in part will become apparent to those skilled in the art upon examination of the following, or may be learned through routine experimentation upon practice of the invention.

## BRIEF DESCRIPTION OF THE DRAWINGS

FIG. 1 is a graph of dosage versus cycles of concentration for various working examples.

FIG. 2 is a graph of dosage versus cycles of concentration of some of the working examples of **FIG. 1** in sea water and synthetic sea water.

## DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

## Definitions

Unless otherwise defined, all technical and scientific terms used herein have the same meaning as commonly understood by one of ordinary skill in the art. In case of conflict, the present document, including definitions, will control. Preferred methods and materials are described below, although methods and materials similar or equivalent to those described herein can be used in practice or testing of the present invention. As used herein, the term *"polymer composition"* means a water soluble, emulsible, or dispersible polymer of two or more polymerized monomeric units. Unless otherwise specified or provided by context, "polymer composition" refers to the polymer as synthesized, that is, prior to mixture in a water source as a scale inhibitor or another use. As used herein, the term *"monomer"* is used in context to mean an unsaturated radically polymerizable compound, a conjugate base thereof, a salt thereof (*e.g.*, carboxylate salt), or the polymerized residue thereof. Monomers may include an anionic monomer or cationic monomer. As used herein, the term *"anionic monomer"* means an unsaturated compound or polymerized residue thereof bearing an acidic group having a pKa of about 5 or less, the conjugate base thereof bearing a negative charge, or a salt thereof. As used herein, the term *"cationic monomer"* means an unsaturated compound or polymerized residue thereof bearing a positive charge, or a salt thereof.

As used herein, the term *"chemically different"* refers to chemical species having a different number of carbon atoms and/or different functionalities (*e.g.*, moieties) from another species; different isomers; or two or more such differences. For the purposes of this disclosure an acid, an ion, a conjugate base, or a salt of a chemical species is not considered chemically different from the chemical species.

As used herein, the term *"polymer mixture"* means a polymer composition, as disclosed herein, as mixed in water, a water source, an aqueous solution, or combinations of any of the foregoing. Polymer mixtures may include a polymer dispersion, a polymer emulsion, a dissolved polymer solution, or combinations of any of the foregoing in water and/or a water source. As context dictates, the term *"mixing"* may include emulsifying, dispersing, dissolving, or otherwise adding the polymer composition to water and/or the water source. As context dictates, the term *"mixed"* may refer to an emulsified, dispersed, dissolved, or other combination of the polymer composition and water and/or the water source, or to the act of mixing as described above.

As used herein, the term *"polymer dispersion"* means a solid polymer composition substantially suspended or dissolved in water or a water based solution. The polymer dispersion is a dispersion as formed, or in the case of some applications the dispersion before circulation, during circulation, after circulation, before injection, during injection, or after injection as determined by context. Water based solutions may include one or more dissolved salts, buffers, acids, bases, surfactants, or other dissolved, dispersed, or emulsified compounds, materials, components, or combinations thereof.

As used herein, the term *"polymer emulsion"* means a liquid polymer composition substantially suspended in water and/or a water source. Emulsified polymer compositions (latices) include a continuous phase and a discontinuous phase dispersed in the continuous phase. In some embodiments, an emulsion is a microemulsion. Microemulsions are characterized as emulsions that are substantially transparent and thermodynamically stable. The polymer emulsion is an emulsion as formed, or in the case of some applications the emulsion before circulation, during circulation, after circulation, before injection, during injection, or after injection as determined by context. A polymer emulsion may include one or more dissolved salts, buffers, acids, bases, surfactants, or other dissolved, dispersed, or emulsified compounds, materials, components, or combinations thereof.

As used herein, the term *"tagging agent"* means a monomer capable of fluorescing or a derivative thereof. As used herein, the term *"tagged polymer"* means a polymer composition, as described herein, that has a tagging agent polymerized therein.

As used herein, the term *"water source"* means a source of water having a total dissolved solids ("TDS") content of about 4000 ppm to 350,000 ppm or one or more of a dissolved calcium content of about 300 ppm to 15,000 ppm, a dissolved magnesium content of about 1000 ppm to 30,000 ppm, a dissolved potassium content of about 300 ppm to 15,000 ppm, a dissolved sodium content of about 5,000 ppm to about 100,000 ppm, a dissolved silica content of about 10 ppm to about 1000 ppm, carbonate alkalinity content of about 150 ppm to about 3000 ppm, a dissolved iron content of about 0.01 ppm to about 10 ppm, a dissolved manganese content of about 0.01-10 ppm, or a dissolved sulfate content of about 2000 to about 20,000 ppm. As used herein *"TDS"* refers to the total amount of non-polymeric minerals, salts, metals, anions, and cations dissolved in a given volume of water. Some water sources may include well water, produced water, connate, waste water such as runoff water, "gray" water, treated or partially treated waste water, brackish water, sea water, or a combination of two or more such water sources as determined by context. In some embodiments, a water source includes one or more salts, ions, buffers, acids, bases, surfactants, or other dissolved, dispersed, or emulsified compounds, materials, components, or combinations thereof. In some such embodiments, the total dissolved solids are substantially non-polymeric solids. In some such embodiments, the dissolved solids comprise, consist essentially of ionic compounds. Generally and as determined by context, the term *"water source"* includes high TDS water sources (e.g., seawater, connate, produced water, or brackish water) and/or high temperature *(e.g.,* 40 degrees Celsius and above) water. A *"water source"* may also include fresh water such as tap water, distilled water, or any other low TDS water (e.g., water having a TDS below the above noted thresholds) that is, was, or will be concentrated to contain the TDS content disclosed above for a water source. For example, fresh water having a relatively low TDS content may be used in a cooling system having a cooling tower, wherein the relatively low TDS content of the fresh water becomes increasingly concentrated over time due to evaporation of water on the cooling tower.

As used herein, the term *"produced water"* means connate (native water within a reservoir prior to flowback) or flowback water (water that flows from a subterranean reservoir after one or more hydraulic fracturing or other well formation operations). In some embodiments, the produced water may contain at least some of the TDS content and/or associated dissolved solids species and content disclosed above for the water source. For example, the produced water may contain the a total TDS content of 4000 ppm to 350,000 ppm, or one or more of a dissolved calcium content of about 300 ppm to 15,000 ppm, a dissolved magnesium content of about 1000 ppm to 30,000 ppm, a dissolved potassium content of about 300 ppm to 15,000 ppm, a dissolved sodium content of about 5,000 ppm to about 100,000 ppm, a dissolved silica content of about 10 ppm to about 1000 ppm, carbonate alkalinity content of about 150 ppm to about 3000 ppm, a dissolved iron content of about 0.01 ppm to about 10 ppm, a dissolved manganese content of about 0.01-10 ppm, or a dissolved sulfate content of about 2000 to about 20,000 ppm.

As used herein, the term *"dosage"* refers to the concentration of a polymer in a water source, such as in parts per million (ppm). Dosage includes the as-mixed amount of polymer in the water source.

As used herein, *"cycles of concentration ('COC)"* refers to the ratio of the concentration of dissolved solids *(e.g.,* TDS) in the blowdown water as compared to the concentration of dissolved solids in make-up water of a particular water containing system. Notwithstanding the differences in TDS content between blow-down water and make-up water, typically, COC is measured using the same water source for all of the water associated therewith (*e.g*., saltwater from the same source makes up the water in the system (blow-down) and the make-up water). The specific TDS content associated with a COC varies with the TDS content of the particular water source in use.

As used herein, *"water containing system"* refers to a system having one or more hard parts that conduct, hold, contain, filter, or otherwise come in contact with a water source. Exemplary water containing systems include cooling systems (*e.g.*, cooling towers, radiators, heat pipes, etc.), pipes, drilling equipment (*e.g.*, drill strings, drilling mud, etc.), fracking equipment, paper or pulp processing systems, wastewater treatment systems, water purification systems, ware washing, evaporators, condensers, filtration equipment, membranes, mining equipment, water softening systems, kamyr digesters, pumps, storage vessels, or any other systems using water sources that contact one or more surfaces therein. Such surfaces may include the interior of pipes, storage vessels, radiators, heat pipes, filters, digesters, condensers, etc.; the exterior of cooling towers; or any other surface that contacts a water source. The surfaces of the water containing systems disclosed herein may include metals, such as iron, steel (*e.g.*, stainless steel or galvanized steel), copper, lead, zinc (*e.g.*, anodized pipes), aluminum, or any other metal suitable for use in water containing systems; plastics, such as polyethylene (*e.g.*, PEX), polypropylene, polytetrafluoroethylene, polyvinyl chlorides, acrylonitrile butadiene styrene, etc.; glass *(e.g.,* glass storage vessels), rubber or latex (rubber hoses or tubes); fiberglass; concrete or stone; or any other material suitable to hold, transport, or filter water.

As used herein, the term *"molecular weight"* refers to the weight average molecular weight (Mw).

The terms *"comprise(s)," "include(s)," "having," "has," "can," "contain(s),"* and variants thereof, as used herein, are intended to be open-ended transitional phrases, terms, or words that do not necessarily but may preclude the possibility of additional acts or structures. The singular forms *"a," "and,"* and *"the"* include plural references unless the context clearly dictates otherwise. The present disclosure also contemplates other embodiments *"comprising," "consisting of,"* and *"consisting essentially of,"* the embodiments or elements presented herein, whether explicitly set forth or not. Generally and as determined by context, the term *"includes,* " as used in the specification, may be interpreted to mean any of *"comprising," "consisting of,"* or *"consisting essentially of."*

The terms *"consisting essentially of'* or *"consist essentially of"* mean that the methods and compositions may include additional steps, components, ingredients or the like, but only if the additional steps, components and/or ingredients do not materially alter the basic and novel characteristics of the claimed methods and compositions.

As used herein, the term *"optional"* or *"optionally"* means that the subsequently described event or circumstance may but need not occur, and that the description includes instances where the event or circumstance occurs and instances in which it does not.

As used herein, the term *"about"* modifying, for example, the quantity of an ingredient in a composition, concentration, volume, process temperature, process time, yield, flow rate, pressure, and like values, and ranges thereof, employed in describing the embodiments of the disclosure, refers to variation in the numerical quantity that can occur, for example, through typical measuring and handling procedures used for making compounds, compositions, concentrates or use formulations; through inadvertent error in these procedures; through differences in the manufacture, source, or purity of starting materials or ingredients used to carry out the methods, and like proximate considerations. The term *"about"* also encompasses amounts that differ due to aging of a formulation with a particular initial concentration or mixture, and amounts that differ due to mixing or processing a formulation with a particular initial concentration or mixture. Where modified by the term *"about"* the claims appended hereto include equivalents to these quantities.

As used herein, the word *"substantially"* modifying, for example, the type or quantity of an ingredient in a composition, a property, a measurable quantity, a method, a position, a value, or a range, employed in describing the embodiments of the disclosure, refers to a variation that does not affect the overall recited composition, property, quantity, method, position, value, or range thereof in a manner that negates an intended composition, property, quantity, method, position, value, or range. Examples of intended properties include, solely by way of non-limiting examples thereof, flexibility, partition coefficient, rate, solubility, temperature, and the like; intended values include thickness, yield, weight, concentration, and the like. The effect on methods that are modified by *"substantially"* include the effects caused by variations in type or amount of materials used in a process, variability in machine settings, the effects of ambient conditions on a process, and the like wherein the manner or degree of the effect does not negate one or more intended properties or results; and like proximate considerations. Where modified by the term *"substantially"* the claims appended hereto include equivalents to these types and amounts of materials.

**Discussion**

Polymer Compositions

We have found new polymer compositions (*e.g.*, composite polymers) capable of inhibiting scale formation in a water containing system without the use of phosphorous containing moieties or residues. Polymer compositions including acrylic acid ("AA"), maleic acid ("MA"), methacrylic acid ("MAA"), conjugate bases thereof, or salts thereof, and at least one additional monomer may inhibit scale formation in water containing systems. Such scale formation may be due to deposition of scale forming components such as alkaline metals or alkaline earth metals in solution or solid form (*e.g.*, suspended or dissolved solids) and counter ions thereof (*e.g.*, carbonate, sulfate, phosphate, etc.) in a water source and/or a high temperatures of the water source. The polymer compositions and polymer mixtures disclosed herein inhibit scale formation, such as calcium carbonate scales, calcium sulfate scales, etc., in water containing systems without the use of phosphorous or phosphorous containing compounds (*e.g.,* phosphates) that tend to foul ground water or watersheds. The polymers herein may be used in any water containing system including a water source having high TDS, such as connate, produced water, or saltwater (*e.g.*, brackish water or seawater) systems. Suitable applications for the polymers herein may include scale or corrosion inhibition in desalination systems; cooling systems employing salt, brine, or seawater; drilling systems utilizing aqueous drilling fluids or produced water; pulp processing; or any other water containing system in which scale inhibition is desired.

The polymer compositions disclosed herein can include at least two monomers, such as a copolymer including an AA residue and a 2-acrylamido-2-methylpropane sulfonic acid ("ATBS") residue. The polymers disclosed herein may inhibit scale formation when used at relatively low concentrations in water sources, such as below about 200 ppm. For example, the copolymers, terpolymers, tetrapolymers, and pentapolymers disclosed below may facilitate selective inhibition of mineral scales in systems utilizing seawater, without the presence of phosphorous containing moieties. Such mineral scales can include deposits of calcium carbonate, calcium bicarbonate, calcium sulfate, calcium phosphate, or magnesium bicarbonate by way of example.

The polymer compositions disclosed herein may include two or more polymerized monomers, such as 2-10 monomers, 2-7 monomers, 2-5 monomers, 3-5 monomers, 2 monomers, 3 monomers, 4 monomers, 5 monomers, or more than 5 monomers, as described below. The polymer compositions herein may be substantially free of (e.g., having substantially no) phosphorous or phosphorous containing materials, such as phosphates, phosphonates, or the like. According to the invention, the polymer compositions include more than two polymerized monomers.

Copolymers

In some aspects, not forming part of the current invention, the scale inhibiting polymer composition is a copolymer. The copolymer may comprise, consist essentially of, or consist of a polymerized residue of 2 or more monomers. The two or more monomers may include a first monomer comprising, consisting essentially of, or consisting of a carboxylic acid or a residue thereof and a second monomer comprising, consisting essentially of, or consisting of a sulfonated acid or a residue thereof. The first monomer may include a carboxylic acid or a residue of a molecule having at least one carboxyl moiety, a salt thereof, or a conjugate base thereof. The carboxylic acid may include a single carboxyl moiety or a plurality of carboxyl moieties (e.g., dicarboxylic acids such as maleic acid, etc.).

Suitable carboxylic acids for use as the first monomer may comprise, consist essentially of, or consist of, by way of example, an alkyl acrylic acid such as MAA, a butenoic acid (e.g., crotonic acid), a pentenoic acid, propenoic acid (AA), or any other unsaturated monocarboxylic acid capable of polymerizing; dicarboxylic acids such as MA or maleic anhydride, fumaric acid, itaconic acid; glutaconic acid, muconic acid, succinic acid, or any other unsaturated dicarboxylic acid or anhydride thereof capable of polymerizing; tricarboxylic acids or greater, such as citric acid, aconitic acid, or any other carboxylic acid having three or more carboxylic acid moieties; or any other monomers having at least one carboxyl moiety; a salt of any of the foregoing, or a conjugate base of any of the foregoing. In some embodiments, the first monomer is formed from one of any of the foregoing carboxylic acids, a salt thereof, or a conjugate base thereof. For example, the first monomer may include a carboxylate (e.g., dicarboxylate) of any of the foregoing carboxylic acids. Carboxylic acid salts may include Lithium, Beryllium, Sodium, Magnesium, Potassium, Calcium, Zinc etc., salts.

The first monomer may constitute about 55 mol% of the copolymer or more, such as about 55 mol% to about 99 mol%, about 60 mol% to about 98 mol%, about 70 mol% to about 95 mol%, about 80 mol% to about 99 mol%, about 90 mol% to about 97 mol%, about 93 mol% to about 99 mol%, about 96 mol% to about 99 mol%, about 92 mol% to about 94 mol%, about 83 mol% to about 87 mol%, about 88 mol% to about 92 mol%, about 93 mol% to about 96 mol%, about 95 mol% to about 98.5 mol%, about 60 mol%, about 70 mol%, about 80 mol%, about 85 mol%, about 90 mol%, about 92.9 mol%, about 93.3 mol%, about 95 mol%, about 96 mol%, about 96.4 mol%, about 98.4 mol%, or about 98.5 mol% of the copolymer or less.

The first monomer may constitute about 50 wt% of the copolymer or more, such as about 50 wt% to about 95 wt%, about 60 wt% to about 90 wt%, about 70 wt% to about 85 wt%, about 80 wt% to about 95 wt%, about 85 wt% to about 90 wt%, about 90 wt% to about 95 wt%, about 73 wt% to about 77 wt%, about 78 wt% to about 82 wt%, about 83 wt% to about 87 wt%, about 88 wt% to about 92 wt%, about 93 wt% to about 96 wt%, about 60 wt%, about 70 wt%, about 80 wt%, about 85 wt%, about 90 wt%, about 95 wt%, or about 96 wt% of the copolymer or less.

The second monomer of the copolymer comprises, consists essentially of, or consists of a sulfonated acid or a residue thereof. The sulfonated acid may include a sulfonated acid moiety, a salt thereof, or a conjugate base thereof. The sulfonated acid may include an amide moiety, such as in ATBS. Suitable sulfonated acids may include ATBS, sulfostyrene, vinylsulfonic acid, methallylsulfonic acid, a salt of the foregoing (e.g., sodium methallyl sulfonate or ATBS sodium salts), or a conjugate base of the foregoing (e.g., methallyl sulfonate).

The second monomer may constitute about 45 mol% of the copolymer or less, such as about 0.01 mol% to about 45 mol%, about 1 mol% to about 40 mol%, about 20 mol% to about 30 mol%, about 0.01 mol% to about 15 mol%, about 0.01 mol% to about 10 mol%, about 0.01 mol% to about 5 mol%, about 2 mol% to about 4 mol%, about 1 mol% to about 5 mol%, about 5 mol% to about 15 mol%, about 10 mol% to about 15 mol%, about 5 mol% to about 10 mol%, about 18 mol% to about 22 mol%, about 13 mol% to about 17 mol%, about 8 mol% to about 12 mol%, about 3 mol% to about 7 mol%, about 2 mol%, about 3 mol%, about 3.6 mol%, about 3.7 mol%, about 4 mol%, about 5 mol%, about 10 mol%, about 15 mol%, about 20 mol%, about 20 mol% or less, or about 10 mol% of the copolymer or less.

The second monomer may constitute about 50 wt% of the copolymer or less, such as about 0.01 wt% to about 50 wt%, about 10 wt% to about 40 wt%, about 20 wt% to about 30 wt%, about 0.01 wt% to about 15 wt%, about 0.01 wt% to about 10 wt%, about 0.01 wt% to about 5 wt%, about 5 wt% to about 15 wt%, about 10 wt% to about 15 wt%, about 5 wt% to about 10 wt%, about 18 wt% to about 22 wt%, about 13 wt% to about 17 wt%, about 8 wt% to about 12 wt%, about 3 wt% to about 7 wt%, about 5 wt%, about 10 wt%, about 15 wt%, about 20 wt%, about 20 wt% or less, or about 10 wt% of the copolymer or less.

The first monomer of the copolymer comprises, consists essentially of, or consists of one or more of AA, MA, MAA, or residues thereof. In an embodiment, the second monomer of the copolymer comprises, consists essentially of, or consists of one or more of MA, ATBS, sulfostyrene, methallylsulfonic acid, or residues thereof, where the second monomer is chemically different (*e.g.*, chemically distinct) from the first monomer. In an embodiment, the copolymer includes AA residue and ATBS residue. The AA residue may constitute about 90 mol% to about 99 mol% *(e.g.,* about 95 mol% to about 98.5 mol%) of the copolymer and the ATBS residue may constitute at least a portion of the balance of the copolymer. In an embodiment, the copolymer is MA residue and ATBS residue. The MA residue may constitute about 90 mol% to about 99 mol% *(e.g.,* about 95 mol% to about 98.5 mol%) of the copolymer and the ATBS residue may constitute at least a portion of the balance of the copolymer. In an embodiment, the copolymer is MAA residue and ATBS residue. The MAA residue may constitute about 90 mol% to about 99 mol% *(e.g.,* about 95 mol% to about 98.5 mol%) of the copolymer and the ATBS residue may constitute at least a portion of the balance of the copolymer. In an embodiment, the copolymer comprises, consists essentially of, or consists of a first monomer including one of AA, MA, MAA, or residues thereof; and a second monomer including one of sulfostyrene residue, methallyl sulfonate, or residues thereof. For example, the first monomer may be AA or MA residue and the second monomer may be sulfostyrene residue. The AA residue may constitute about 90 mol% to about 99 mol% *(e.g.,* about 95 mol% to about 98.5 mol%) of the copolymer and the sulfostyrene residue may constitute at least a portion of the balance of the copolymer.

As discussed in detail below, the copolymer can exhibit any of a wide range of molecular weights. As discussed in more detail below, the copolymer can be mixed in water (*e.g.*, tap or distilled water) and/or a water source in any of a wide range of concentrations. Without wishing to be limited by theory, we believe that during use, one or more moieties present in the copolymer may act to chelate, bind, or otherwise render components of scale *(e.g.,* calcium or magnesium) unavailable to form the scale *(e.g.,* calcium carbonate or calcium sulfate) or deposit on equipment in water containing systems, such as cooling, desalination, or drilling equipment. As discussed in detail below, the copolymers herein may also include a tagging agent.

Terpolymers

The terpolymer may comprise, consist essentially of, or consist of a first monomer including a carboxylic acid or a residue thereof; a second monomer including a sulfonated acid or a residue thereof, or a second, chemically different carboxylic acid or a residue thereof; and a third monomer including a sulfonated acid or a residue thereof, a third, chemically different carboxylic acid *(e.g.,* differing from the first and second carboxylic acids), or an alkylated molecule or a residue thereof. In an embodiment, each of the first, second, and third monomers are chemically different from each other.

The first monomer comprises, consists essentially of, or consists of a (first) carboxylic acid or a residue thereof substantially as described above with respect to the copolymer. The first monomer is selected from acrylic acid, maleic acid, methacrylic acid, salts thereof or conjugate bases thereof. Other monomers outside the scope of the invention are: a butenoic acid (*e.g.*, crotonic acid), a pentenoic acid, propenoic acid (AA), or any other unsaturated monocarboxylic acid capable of polymerizing; dicarboxylic acids such as MA, fumaric acid, itaconic acid; glutaconic acid, muconic acid, succinic acid, or any other unsaturated dicarboxylic acid capable of polymerizing; tricarboxylic acids or greater, such as citric acid, aconitic acid, or any other unsaturated carboxylic acid having three or more carboxylic acid moieties (*e.g.*, carboxyl groups); or any other molecule having at least one carboxyl moiety, a salt thereof, or a conjugate base thereof. For example, the first monomer may include a carboxylate (*e.g.*, dicarboxylate) of any of the foregoing carboxylic acid monomers. Carboxylic acid salts may include Lithium, Beryllium, Sodium, Magnesium, Potassium, Calcium, Zinc, etc., salts. According to the invention, the first monomer comprises a residue of one of: acrylic acid, a salt thereof, or a conjugate base thereof, maleic acid, a salt thereof, or a conjugate base thereof, or methacrylic acid, a salt thereof, or a conjugate base thereof.

The first monomer may constitute about 55 mol% of the terpolymer or more, such as about 55 mol% to about 99 mol%, about 60 mol% to about 98 mol%, about 70 mol% to about 95 mol%, about 80 mol% to about 99 mol%, about 85 mol% to about 98 mol%, about 90 mol% to about 97 mol%, about 93 mol% to about 97 mol%, about 93 mol% to about 99 mol%, about 96 mol% to about 99 mol%, about 92 mol% to about 94 mol%, about 83 mol% to about 87 mol%, about 88 mol% to about 92 mol%, about 93 mol% to about 96 mol%, about 60 mol%, about 70 mol%, about 80 mol%, about 85 mol%, about 90 mol%, about 92.9 mol%, about 93.3 mol%, about 95 mol%, about 96 mol%, about 96.4 mol%, or about 98.4 mol% of the terpolymer or less.

The first monomer may constitute about 50 wt% of the terpolymer or more, such as about 50 wt% to about 95 wt%, about 60 wt% to about 90 wt%, about 70 wt% to about 85 wt%, about 75 wt% to about 90 wt%, about 80 wt% to about 95 wt%, about 85 wt% to about 90 wt%, about 90 wt% to about 95 wt%, about 78 wt% to about 82 wt%, about 83 wt% to about 87 wt%, about 88 wt% to about 92 wt%, about 60 wt%, about 70 wt%, about 80 wt%, about 85 wt%, about 90 wt%, or about 90 wt% of the terpolymer or less. According to the invention, the first monomer constitutes 55 mol% to about 99 mol% of the polymer.

The second monomer is chemically different from the first monomer.

According to the invention, the second monomer comprises a residue of one of: 2-acrylamido-2-methylpropane sulfonic acid, a salt thereof or a conjugate base thereof, maleic acid, a salt thereof or a conjugate base thereof, methacrylic acid, a salt thereof or a conjugate base thereof sulfostyrene, or a methallyl sulfonate.

For example, the second monomer may include MA or MAA residue while the first monomer includes AA residue, or vice versa.

The second monomer may constitute about 45 mol% of the terpolymer or less, such as about 0.01 mol% to about 45 mol%, about 10 mol% to about 40 mol%, about 20 mol% to about 30 mol%, about 0.01 mol% to about 15 mol%, about 0.01 mol% to about 10 mol%, about 0.01 mol% to about 5 mol%, about 1.5 mol% to about 4 mol%, about 2 mol% to about 5 mol%, about 5 mol% to about 15 mol%, about 10 mol% to about 15 mol%, about 5 mol% to about 10 mol%, about 18 mol% to about 22 mol%, about 13 mol% to about 17 mol%, about 8 mol% to about 12 mol%, about 3 mol% to about 7 mol%, about 10 mol%, about 1.6 mol%, about 2 mol%, about 3 mol%, about 3.6 mol%, about 3.7 mol%, about 4 mol%, about 5 mol%, about 10 mol%, about 15 mol%, about 20 mol%, about 20 mol% or less, about 10 mol% or less, or about 5 mol% of the terpolymer or less.

The second monomer may constitute about 50 wt% of the terpolymer or less, such as about 0.01 wt% to about 50 wt%, 5 wt% to about 50 wt%, about 10 wt% to about 40 wt%, about 20 wt% to about 30 wt%, about 5 wt% to about 15 wt%, about 10 wt% to about 15 wt%, about 0.01 wt% to about 15 wt%, about 0.01 wt% to about 10 wt%, about 0.01 wt% to about 5 wt%, about 5 wt% to about 10 wt%, about 18 wt% to about 22 wt%, about 13 wt% to about 17 wt%, about 8 wt% to about 12 wt%, about 3 wt% to about 7 wt%, about 5 wt%, about 10 wt%, about 15 wt%, about 20 wt%, about 20 wt% or less, or about 10 wt% of the terpolymer or less. According to the invention, the second monomer constitutes 0.01 mol% to about 45 mol% of the polymer.

The third monomer is chemically different from the first monomer and the second monomer.

The third monomer comprises a residue of tert-butylacrylamide.

The third monomer may constitute about mol% to about 5 mol%, about 1 mol% to about 5 mol%, about 1 mol% to about 3 mol%, about 1.5 mol% to about 3.5 mol%, about 3 mol% to about 5 mol%, about 1.8 mol%, about 2 mol%, about 3 mol%, about 5 mol%, about 5 mol% or less, or about 3 mol% of the terpolymer or less.

The third monomer may constitute about 10 wt% of the terpolymer or less, such as about 0.01 wt% to about 10 wt%, about 1 wt% to about 9 wt%, about 2 wt% to about 8 wt%, about 3 wt% to about 7 wt%, about 4 wt% to about 6 wt%, about 5 wt% to about 10 wt%, about 0.01 wt% to about 5 wt%, about 1 wt% to about 5 wt%, about 3 wt% to about 5 wt%, about 5 wt% to about 8 wt%, about 8 wt% to about 10 wt%, about 5 wt%, about 10 wt%, about 7 wt% of the terpolymer or less, or about 5 wt% of the terpolymer or less. According to the invention, the third monomer constitutes 0.01 mol% to about 5 mol% of the polymer.

The first monomer of the terpolymer comprises, consists essentially of, or consists of one or more of AA, MA, MAA, or residues thereof. In an embodiment, the second monomer of the terpolymer comprises, consists essentially of, or consists of one or more of MA, MAA, ATBS, or residues thereof, where the second monomer is chemically different from the first monomer. The third monomer is tert-butylacrylamide.

The AA residue may constitute about 90 mol% to about 98 mol% of the terpolymer, the MA residue may constitute about 1 mol% to about 7 mol% of the terpolymer, and the ATBS residue may constitute at least a portion of the balance of the terpolymer (e.g., about 1 mol% to about 7 mol%). The AA residue may constitute about 90 mol% to about 98 mol% of the terpolymer, the MAA residue may constitute about 1 mol% to about 7 mol% of the terpolymer, and the ATBS residue may constitute at least a portion of the balance of the terpolymer (e.g., about 1 mol% to about 7 mol%).

In an embodiment, the terpolymer comprises, consists essentially of, or consists of one or more of AA residue, ATBS residue, and tert-butylacrylamide residue. The AA residue may constitute about 90 mol% to about 98 mol% of the terpolymer, the ATBS residue may constitute about 1 mol% to about 7 mol% of the terpolymer, and the tert-butylacrylamide residue may constitute at least a portion of the balance of the terpolymer (e.g., about 1 mol% to about 7 mol%).

As discussed in detail below, the terpolymer can exhibit any of a wide range of molecular weights. As discussed in more detail below, the terpolymer can be mixed (e.g., at least partially dissolved, dispersed, or suspended) in water and/or a water source in any of a wide range of dosages. Without wishing to be limited by theory, we believe that during use, one or more moieties present in the copolymer may act to chelate, bind, or otherwise render components of scale (e.g., calcium or magnesium) unavailable to form the scale (e.g., calcium carbonate or calcium sulfate) or deposit on equipment in water containing systems, such as cooling, desalination, or drilling equipment. As discussed in detail below, the terpolymers herein may also include a tagging agent (e.g., fluorescent tag or marker).

Tetrapolymers

In some embodiments, the scale inhibiting polymer composition is a tetrapolymer (*e.g.*, quaterpolymer or quadpolymer) according to the claims. The tetrapolymer may comprise, consist essentially of, or consist of a first monomer including a carboxylic acid or a residue thereof; a second monomer including a sulfonated acid or a residue thereof, or a second, chemically different carboxylic acid or a residue thereof; a third monomer being tert-butylacrylamide; and a fourth monomer including an alkylated molecule or a residue thereof, or a fourth, chemically different carboxylic acid or a residue thereof. In an embodiment, each of the first, second, third, and fourth monomers are chemically different from each other.

The first, second and third monomers may comprise, consist essentially of, or consist of a (first) carboxylic acid or a residue thereof substantially as described above with respect to the terpolymer. For example, suitable carboxylic acids may include, by way of example, an alkyl acrylic acid such as AA, MA, or MAA, or any other unsaturated carboxylic acid capable of polymerizing; or any other unsaturated molecule having at least one carboxyl moiety; a salt of any of the foregoing, or a conjugate base of any of the foregoing. In some aspects, the first monomer includes a residue of one of any of the carboxylic acids disclosed herein, a salt thereof, or a conjugate base thereof. Carboxylic acid salts may include Lithium, Beryllium, Sodium, Magnesium, Potassium, Calcium, Zinc, etc., salts.

The first monomer may constitute about 55 mol% of the tetrapolymer or more, such as about 80 mol% or more, about 55 mol% to about 99 mol%, about 65 mol% to about 95 mol%, about 75 mol% to about 94 mol%, about 80 mol% to about 95 mol%, about 85 mol% to about 93 mol%, about 90 mol% to about 98 mol%, about 80 mol% to about 90 mol%, about 90 mol% to about 95 mol%, about 85 mol% to about 90 mol%, about 91 mol% to about 95 mol%, about 65 mol%, about 75 mol%, about 85 mol%, about 90 mol%, about 93 mol%, about 95 mol%, about 93 mol% or less, or about 95 mol% of the tetrapolymer or less.

The first monomer may constitute about 50 wt% of the tetrapolymer or more, such as about 75 wt% or more, about 50 wt% to about 95 wt%, about 60 wt% to about 90 wt%, about 70 wt% to about 85 wt%, about 75 wt% to about 90 wt%, about 80 wt% to about 95 wt%, about 85 wt% to about 90 wt%, about 75 wt% to about 85 wt%, about 78 wt% to about 82 wt%, about 83 wt% to about 87 wt%, about 88 wt% to about 92 wt%, about 60 wt%, about 70 wt%, about 80 wt%, about 85 wt%, about 90 wt%, or about 85 wt% of the tetrapolymer or less.

In an aspect the second monomer of the tetrapolymer comprises, consists essentially of, or consists of a sulfonated acid, a (second) carboxylic acid, or a residue of any of the foregoing, where the second monomer is chemically different from the first monomer. The sulfonated acid (*e.g.*, sulfonic acids) may include a sulfonate moiety, a salt thereof, or a conjugate base thereof as described above with respect to copolymer and terpolymer. For example, suitable sulfonated acids may include ATBS, sulfostyrene, vinylsulfonic acid, or methallylsulfonic acid, any other sulfonated acid, a salt of the foregoing, or a conjugate base of the foregoing, as described above.

In an aspect, the second monomer comprises, consists essentially of, or consists of any of the carboxylic acids or residues thereof disclosed above with respect to the first monomer, so long as the carboxylic acid of the second monomer is chemically different from the carboxylic acid of the first monomer. For example, the second monomer may comprise, consist essentially of, or consist of one or more of MA or MAA residue while the first monomer includes AA residue, or vice versa.

The second monomer may constitute about 20 mol% of the tetrapolymer or less, such as about more than about 0.01 mol% to about 20 mol%, about 0.01 mol% to about 15 mol%, about 0.01 mol% to about 10 mol%, about 0.01 mol% to about 5 mol%, about 2 mol% to about 10 mol%, about 3 mol% to about 8 mol%, about 5 mol% to about 15 mol%, about 8 mol% to about 12 mol%, about 1 mol% to about 4 mol%, about 4 mol% to about 6 mol%, about 5 mol% to about 10 mol%, 0.01 mol% to about 10 mol%, about 1 mol% to about 5 mol%, about 2 mol% to about 4 mol%, about 3 mol% to about 5 mol%, about 5 mol% to about 8 mol%, about 8 mol% to about 10 mol%, about 10 mol% to about 15 mol%, about 1 mol%, about 2 mol%, about 3 mol%, about 3.5 mol%, about 4 mol%, about 5 mol%, about 10 mol% or less, or about 5 mol% of the tetrapolymer or less.

The second monomer may constitute about 20 wt% of the tetrapolymer or less, such as about more than about 0.01 wt% to about 20 wt%, 0.01 wt% to about 15 wt%, 0.01 wt% to about 10 wt%, 0.01 wt% to about 5 wt%, about 2 wt% to about 18 wt%, about 3 wt% to about 12 wt%, about 5 wt% to about 15 wt%, about 8 wt% to about 12 wt%, about 4 wt% to about 6 wt%, about 5 wt% to about 10 wt%, 0.01 wt% to about 10 wt%, about 1 wt% to about 5 wt%, about 3 wt% to about 5 wt%, about 5 wt% to about 8 wt%, about 8 wt% to about 10 wt%, about 10 wt% to about 15 wt%, about 10 wt% or less, or about 5 wt% of the tetrapolymer or less.

In an embodiment, the third monomer of the tetrapolymer comprises tert-butylacrylamide.

The third monomer may constitute about 1 mol% to about 3 mol%, about 3 mol% to about 5 mol%, about 1 mol% to about 5 mol%, about 1 mol%, about 1.8 mol%, about 2 mol%, about 3 mol%, about 5 mol%, about 5 mol% or less, or about 3 mol% of the tetrapolymer or less.

The third monomer may constitute about 10 wt% of the tetrapolymer or less, such as about 0.01 wt% to about 10 wt%, about 1 wt% to about 9 wt%, about 2 wt% to about 8 wt%, about 3 wt% to about 7 wt%, about 4 wt% to about 6 wt%, about 5 wt% to about 10 wt%, about 1 wt% to about 5 wt%, about 3 wt% to about 5 wt%, about 5 wt% to about 8 wt%, about 8 wt% to about 10 wt%, about 5 wt%, about 10 wt%, about 7 wt% or less, or about 5 wt% of the tetrapolymer or less.

In an embodiment, the fourth monomer of the tetrapolymer comprises, consists essentially of, or consists of a (fourth) carboxylic acid, an alkylated molecule, or a residue of any of the foregoing, where the fourth monomer is chemically different from the first, second, and third monomers. In an embodiment, the alkylated molecule includes at least one alkyl moiety, a residue thereof, a salt thereof, or a conjugate base thereof, as described above.

In an embodiment, the fourth monomer comprises, consists essentially of, or consists of any of the carboxylic acids or residues thereof disclosed above with respect to the first monomer, so long as the carboxylic acid of the fourth monomer is chemically different from the carboxylic acid of the first, second, and third monomers. For example, the fourth monomer may include itaconic acid or crotonic acid and one or more of the first, second, and third monomers may include or consist of AA, MA, and/or MAA, respectively.

The fourth monomer may constitute about 10 mol% of the tetrapolymer or less, such as about 0.01 mol% to about 10 mol%, 0.01 mol% to about 5 mol%, about 1 mol% to about 7 mol%, about 2 mol% to about 6 mol%, about 3 mol% to about 5 mol%, about 1 mol% to about 4 mol%, about 1 mol% to about 3 mol%, about 1.5 mol% to about 3 mol%, about 4 mol% to about 6 mol%, about 5 mol% to about 10 mol%, about 1 mol% to about 5 mol%, about 3 mol% to about 5 mol%, about 5 mol% to about 8 mol%, about 8 mol% to about 10 mol%, about 5 mol%, about 10 mol%, about 7 mol% or less, about 5 mol% or less, or about 3 mol% of the tetrapolymer or less.

The fourth monomer may constitute about 10 wt% of the tetrapolymer or less, such as about 0.01 wt% to about 10 wt%, 0.01 wt% to about 5 wt%, about 1 wt% to about 9 wt%, about 2 wt% to about 8 wt%, about 3 wt% to about 7 wt%, about 4 wt% to about 6 wt%, about 5 wt% to about 10 wt%, about 1 wt% to about 5 wt%, about 3 wt% to about 5 wt%, about 5 wt% to about 8 wt%, about 8 wt% to about 10 wt%, about 5 wt%, about 10 wt%, about 7 wt% or less, or about 5 wt% of the tetrapolymer or less. According to the invention, the polymer comprises optionally about 0.01 mol% to about 10 mol% of a fourth monomer, wherein the fourth monomer comprises a residue that is chemically different from the first monomer, the second monomer, and the third monomer.

In an embodiment, the first monomer of the tetrapolymer comprises, consists essentially of, or consists of one of AA, MA, MAA, or residues thereof. The second monomer of the tetrapolymer comprises, consists essentially of, or consists of one of MA, MAA, ATBS, or residues thereof, where the second monomer is chemically different from the first monomer. The third monomer of the tetrapolymer may comprises, consists essentially of, or consists of one of ATBS, sulfostyrene, methallylsulfonic acid, tert-butylacrylamide, dimethylacrylamide, itaconic acid, crotonic acid or residues thereof, where the third monomer is chemically different from the second monomer and the first monomer. In an aspect, the fourth monomer of the tetrapolymer is one of tert-butylacrylamide, dimethylacrylamide, itaconic acid, crotonic acid, or residues thereof, where the fourth monomer is chemically different from the first, second, and third monomers.

In an aspect, the tetrapolymer comprises, consists essentially of, or consists of AA residue, MA residue, ATBS residue, and tert-butylacrylamide residue. The AA residue may constitute about 85 mol% to about 95 mol% of the tetrapolymer, the MA residue may constitute about 1 mol% to about 7 mol% of the tetrapolymer, the ATBS residue may constitute about 1 mol% to about 7 mol% of the tetrapolymer, and the tert-butylacrylamide residue may constitute at least a portion of the balance of the tetrapolymer (e.g., about 1 mol% to about 7 mol%). The AA residue may constitute about 93 mol% of the tetrapolymer, the MA residue may constitute about 2 mol% of the tetrapolymer, the ATBS residue may constitute about 3.5 mol% of the tetrapolymer, and the tert-butylacrylamide residue may constitute about 1.5 mol % of the tetrapolymer.

In an aspect, the tetrapolymer comprises, consists essentially of, or consists of one or more of AA residue, ATBS residue, itaconic acid or crotonic acid residue, and tert-butylacrylamide residue. The AA residue may constitute about 80 mol% to about 95 mol% of the tetrapolymer, the ATBS residue may constitute about 1 mol% to about 7 mol% of the tetrapolymer, the itaconic acid or crotonic acid residue may constitute about 1 mol% to about 7 mol% of the tetrapolymer, and the tert-butylacrylamide residue may constitute about 1 mol% to about 7 mol% of the tetrapolymer. MA or MAA may be used in place of the AA, where the MA is chemically different from each of the monomers in the tetrapolymers.

As discussed in detail below, the tetrapolymer can exhibit any of a wide range of molecular weights. As discussed in more detail below, the tetrapolymer can be mixed in water and/or a water source in any of a wide range of dosages. Without wishing to be limited by theory, we believe that during use, one or more moieties present in the copolymer may act to chelate, bind, or otherwise render components of scale (e.g., calcium or magnesium) unavailable to form the scale (e.g., calcium carbonate or calcium sulfate) or deposit on equipment in water containing systems, such as cooling, desalination, or drilling equipment. As explained in detail below, the tetrapolymers herein may also include a fluorescent tag or marker.

Pentapolymers

In some embodiments, the scale inhibiting polymer composition is a pentapolymer according to the claims. The pentapolymer may comprise, consist essentially of, or consist of a first monomer including a carboxylic acid or a residue thereof; a second monomer including a second, chemically different carboxylic acid or a residue thereof; a third monomer being tert-butylacrylamide, a fourth monomer including a fourth, chemically different carboxylic acid or a residue thereof; and a fifth monomer including a fifth, chemically different carboxylic acid or a residue thereof ("fourth" and "fifth" correspond to the monomeric designation of the monomer but not necessarily the total amount of carboxylic acids in the polymer). In an embodiment, each of the first, second, third, fourth, and fifth monomers are chemically different from each other.

The first monomer may comprise, consist essentially of, or consist of a (first) carboxylic acid or a residue thereof substantially as described above with respect to the terpolymer, or tetrapolymer. For example, suitable carboxylic acids may include, any carboxylic acid disclosed herein, such as AA, MA, or MAA, or any other unsaturated carboxylic acid capable of polymerizing; or any other molecule having at least one carboxyl moiety; a salt of any of the foregoing, or a conjugate base of any of the foregoing. In some embodiments, the first monomer includes a residue of one of any of the carboxylic acids disclosed herein, a salt thereof, or a conjugate base thereof. Carboxylic acid salts may include Lithium, Beryllium, Sodium, Magnesium, Potassium, Calcium, Zinc, etc., salts.

The first monomer may constitute about 55 mol% of the pentapolymer or more, such as about 75 mol% or more, about 55 mol% to about 97 mol%, about 70 mol% to about 95 mol%, about 80 mol% to about 90 mol%, about 85 mol% to about 95 mol%, about 90 mol% to about 96 mol%, about 92 mol% to about 96 mol%, about 80 mol% to about 95 mol%, about 78 mol% to about 82 mol%, about 83 mol% to about 87 mol%, about 88 mol% to about 92 mol%, about 60 mol%, about 70 mol%, about 80 mol%, about 85 mol%, about 90 mol%, about 91 mol%, about 93 mol%, about 95 mol%, about 96 mol%, or about 95 mol% of the pentapolymer or less.

The first monomer may constitute about 50 wt% of the pentapolymer or more, such as about 75 wt% or more, about 50 wt% to about 95 wt%, about 60 wt% to about 90 wt%, about 70 wt% to about 85 wt%, about 75 wt% to about 90 wt%, about 80 wt% to about 95 wt%, about 85 wt% to about 90 wt%, about 75 wt% to about 85 wt%, about 78 wt% to about 82 wt%, about 83 wt% to about 87 wt%, about 88 wt% to about 92 wt%, about 60 wt%, about 70 wt%, about 80 wt%, about 85 wt%, about 90 wt%, or about 85 wt% of the pentapolymer or less.

In an embodiment, the second monomer of the pentapolymer comprises, consists essentially of, or consists of another (second) carboxylic acid or a residue of thereof, where the second monomer is chemically different from the first monomer. The second monomer may include any of the carboxylic acids or residues thereof disclosed above with respect to the first monomer, so long as the carboxylic acid of the second monomer is chemically different from the carboxylic acid of the first monomer. For example, the second monomer may comprise, consist essentially of, or consist of MA or MAA residue while the first monomer includes AA residue, or vice versa.

The second monomer may constitute about 20 mol% of the pentapolymer or less, such as about more than about 0.01 mol% to about 20 mol%, about 0.01 mol% to about 15 mol%, about 0.01 mol% to about 10 mol%, about 0.01 mol% to about 5 mol%, about 1 mol% to about 3 mol%, about 1 mol% to about 7 mol%, about 2 mol% to about 8 mol%, about 3 mol% to about 7 mol%, about 5 mol% to about 15 mol%, about 8 mol% to about 12 mol%, about 1 mol% to about 4 mol%, about 4 mol% to about 6 mol%, about 5 mol% to about 10 mol%, 1.5 mol% to about 4 mol%, about 1 mol% to about 5 mol%, about 2 mol% to about 4 mol%, about 3 mol% to about 5 mol%, about 5 mol% to about 8 mol%, about 8 mol% to about 10 mol%, about 10 mol% to about 15 mol%, about 1 mol%, about 1.5 mol%, about 2 mol%, about 3 mol%, about 3.5 mol%, about 4 mol%, about 5 mol%, about 10 mol% or less, or about 5 mol% of the pentapolymer or less.

The second monomer may constitute about 10 wt% of the pentapolymer or less, such as about 0.01 wt% to about 10 wt%, 0.01 wt% to about 5 wt%, about 1 wt% to about 9 wt%, about 2 wt% to about 8 wt%, about 3 wt% to about 7 wt%, about 4 wt% to about 6 wt%, about 5 wt% to about 10 wt%, about 1 wt% to about 5 wt%, about 3 wt% to about 5 wt%, about 5 wt% to about 8 wt%, about 8 wt% to about 10 wt%, about 5 wt%, about 10 wt%, about 7 wt% or less, or about 5 wt% of the pentapolymer or less.

In an embodiment, the third monomer of the pentapolymer comprises tert-butylacrylamide residue.

In an embodiment, the third monomer constitutes 0.01 mol% to about 5 mol%, about 3 mol% to about 5 mol%, about 1 mol% to about 5 mol%, about 1 mol% to about 4 mol%, about 1 mol% to about 3 mol%, about 3 mol% to about 5 mol%, about 1 mol%, about 1.2 mol%, about 1.5 mol%, about 1.8 mol%, about 2 mol%, about 3 mol%, about 4 mol%, about 5 mol%, or about 5 mol% of the pentapolymer or less.

In an embodiment, the third monomer constitutes about 10 wt% of the pentapolymer or less, such as about 0.01 wt% to about 10 wt%, 0.01 wt% to about 5 wt%, about 1 wt% to about 9 wt%, about 2 wt% to about 8 wt%, about 3 wt% to about 7 wt%, about 4 wt% to about 6 wt%, about 5 wt% to about 10 wt%, about 1 wt% to about 5 wt%, about 3 wt% to about 5 wt%, about 5 wt% to about 8 wt%, about 8 wt% to about 10 wt%, about 5 wt%, about 10 wt%, about 7 wt% or less, or about 5 wt% of the pentapolymer or less.

In an embodiment, the fourth monomer comprises, consists essentially of, or consists of any of the carboxylic acids or residues thereof disclosed above with respect to the first monomer, so long as the carboxylic acid of the fourth monomer is chemically different from the carboxylic acid of the first monomer, the second monomer, and the third monomer. For example, the fourth monomer may include itaconic acid or crotonic acid and one or more of the first, second, and third monomers may include or consist of AA, MA, and/or MAA, respectively.

The fourth monomer may constitute about 10 mol% of the pentapolymer or less, such as about 0.01 mol% to about 10 mol%, 0.01 mol% to about 5 mol%, about 1 mol% to about 7 mol%, about 2 mol% to about 6 mol%, about 1 mol% to about 3 mol%, about 2 mol% to about 4 mol%, about 3 mol% to about 5 mol%, about 4 mol% to about 6 mol%, about 5 mol% to about 10 mol%, about 1 mol% to about 5 mol%, about 1 mol%, about 1.2 mol%, about 1.5 mol%, about 1.8 mol%, about 2 mol%, about 3 mol%, about 3.5 mol%, about 4 mol%, about 5 mol%, about 10 mol%, about 5 mol% or less, or about 3 mol% of the pentapolymer or less.

The fourth monomer may constitute about 10 wt% of the pentapolymer or less, such as about 0.01 wt% to about 10 wt%, 0.01 wt% to about 5 wt%, about 1 wt% to about 9 wt%, about 2 wt% to about 8 wt%, about 3 wt% to about 7 wt%, about 4 wt% to about 6 wt%, about 5 wt% to about 10 wt%, about 1 wt% to about 5 wt%, about 3 wt% to about 5 wt%, about 2 wt% to about 4 wt%, about 3 wt%, about 5 wt%, about 10 wt%, about 5 wt% or less, or about 3 wt% of the pentapolymer or less. According to the invention, the polymer optionally comprises about 0.01 mol% to about 10 mol% of a fourth monomer, wherein the fourth monomer comprises a residue that is chemically different from the first monomer, the second monomer, and the third monomer.

In an embodiment, the fifth monomer comprises, consists essentially of, or consists of a (fifth) carboxylic acid such as any of the carboxylic acids or residues thereof disclosed above with respect to the first monomer, so long as the carboxylic acid of the fifth monomer is chemically different from a carboxylic acid of the first monomer, the second monomer, the third monomer, and/or the fourth monomer. For example, the fifth monomer may include MAA and one or more of the first, second, third, and fourth monomers may include or consist of AA, MA, itaconic acid, or crotonic acid, respectively.

The fifth monomer may constitute about 10 mol% of the pentapolymer or less, such as about 0.01 mol% to about 10 mol%, 0.01 mol% to about 5 mol%, about 1 mol% to about 7 mol%, about 2 mol% to about 6 mol%, about 1 mol% to about 3 mol%, about 3 mol% to about 5 mol%, about 4 mol% to about 6 mol%, about 5 mol% to about 10 mol%, about 1 mol% to about 5 mol%, about 6 mol% to about 8 mol%, about 1 mol%, about 1.5 mol%, about 2 mol%, about 2.5 mol%, about 3 mol%, about 3.5 mol%, about 4 mol%, about 5 mol%, about 7 mol%, about 10 mol%, about 8 mol% or less, about 5 mol% or less, or about 3 mol% of the pentapolymer or less.

The fifth monomer may constitute about 10 wt% of the pentapolymer or less, such as about 0.01 wt% to about 10 wt%, 0.01 wt% to about 5 wt%, about 1 wt% to about 9 wt%, about 2 wt% to about 8 wt%, about 3 wt% to about 7 wt%, about 4 wt% to about 6 wt%, about 5 wt% to about 10 wt%, about 1 wt% to about 5 wt%, about 3 wt% to about 5 wt%, about 6 wt% to about 8 wt%, about 3 wt%, about 5 wt%, about 7 wt%, about 10 wt%, about 8 wt% or less, or about 7 wt% of the pentapolymer or less. According to the invention, the polymer optionally comprises about 0.01 mol% to about 10 mol% of a fifth monomer, wherein the fifth monomer comprises a residue that is chemically different from the first monomer, the second monomer, the third monomer and the fourth monomer. In an embodiment, a sulfonated acid may be used in place of any of the above listed second, third, fourth, or fifth monomers in the pentapolymer. For example, ATBS may be used instead of the second carboxylic acid of the second monomer as described above. The sulfonated acid may be present in the same mol% or wt% as the respective monomer it substitutes for, as respectively disclosed above. For example, if ATBS were used in place of the second carboxylic acid, the ATBS may be present in the same mol% or wt% as the second carboxylic acid of the second monomer.

In an aspect, the pentapolymer comprises, consists essentially of, or consists of AA residue, MA residue, tert-butylacrylamide residue, itaconic acid or crotonic acid residue, and methacrylic acid residue. The AA residue may constitute about 80 mol% to about 96 mol% of the pentapolymer, the MA residue may constitute about 1 mol% to about 7 mol% of the pentapolymer, the tert-butylacrylamide residue may constitute about 1 mol% to about 7 mol% of the pentapolymer, the itaconic acid or crotonic acid residue may constitute about 1 mol% to about 5 mol% of the pentapolymer, and the MAA residue may constitute at least a portion of the balance of the pentapolymer (*e.g.*, about 1 mol% to about 10 mol%). In an aspect, the AA residue constitutes about 90 mol% of the pentapolymer, the MA residue constitutes about 3 mol% of the pentapolymer, the tert-butylacrylamide residue constitutes about 1.5 mol% of the pentapolymer, the itaconic acid or crotonic acid residue constitutes about 2 mol% of the pentapolymer, and the MAA residue constitutes about 3.5 mol% of the pentapolymer.

As discussed in detail below, the pentapolymer can exhibit any of a wide range of molecular weights. As discussed in more detail below, the pentapolymer can be mixed water and/or in a water source in any of a wide range of dosages. Without wishing to be limited by theory, we believe that during use, one or more moieties present in the copolymer may act to chelate, bind, or otherwise render components of scale (*e.g.*, calcium or magnesium) unavailable to form the scale (*e.g.*, calcium carbonate or calcium sulfate) or deposit on equipment in water containing systems, such as cooling, desalination, or drilling equipment. In some embodiments and as explained in detail below, a fluorescent tag or marker may be added to the pentapolymer.

Polymer Composition Characteristics

The embodiments of polymers (*e.g.*, scale inhibiting polymer compositions) disclosed herein exclude phosphorous or phosphorous containing moieties. The above described polymers may substantially inhibit or prevent scale formation in water containing systems having high TDS water sources (*e.g.*, about 4,000 ppm- to about 350,000). In some embodiments, the polymers described herein may inhibit scale formation without the use of phosphorous or phosphorous containing molecules or moieties therein. In some embodiments, the polymers described herein may be used to inhibit scale formation in combination with phosphorous or phosphorous containing molecules or moieties, such as a phosphonate or phosphate containing molecules, ions, or moieties. The polymers herein may be formed in a liquid, semi-liquid (*e.g.*, gel), or solid form, depending on the specific polymer, monomeric make-up, and/or molecular weight thereof. The polymer solutions disclosed herein may exhibit a viscosity of about 100-200 cps as measured by a Brookfield viscometer at 25 degrees Celsius with a #3 spindle at 30 rpm. The viscosity of any of the polymer compositions disclosed herein, prior to mixing in water and/or a water source, may be about 0.25 Pas or less, such as about 0.05 Pas to about 0.25 Pas, about 0.1 Pas to about 0.2 Pas, about 0.12 Pas to about 0.18 Pas, about 0.14 Pas to about 0.16 Pas, about 0.08 Pas to about 0.12 Pas, about 0.12 Pas to about 0.15 Pas, about 0.15 Pas to about 0.18 Pas, or about 0.18 Pas to about 0.2 Pas ( 250 cps or less, such as about 50 cps to about 250 cps, about 100 cps to about 200 cps, about 120 cps to about 180 cps, about 140 cps, to about 160 cps, about 80 cps to about 120 cps, about 120 cps to about 150 cps, about 150 cps to about 180 cps, or about 180 cps to about 200 cps).

The molecular weight ($M_w$) of any of the polymers disclosed herein, prior to mixing in water and/or a water source, may be at least about 500 g/mol, such as about 500 g/mol to about 50,000 g/mol, about 1000 g/mol to about 20,000 g/mol, about 2,000 g/mol to about 12,000 g/mol, about 500 g/mol to about 3,000 g/mol, about 2,000 g/mol to about 8,000 g/mol, about 3,000 g/mol to about 6,000 g/mol, about 6,000 g/mol to about 9,000 g/mol, about 8,000 g/mol to about 10,000 g/mol, about 9,000 g/mol to about 12,000 g/mol, about 8,000 g/mol to about 15,000 g/mol, about 12,000 g/mol to about 15,000 g/mol, about 15,000 g/mol to about 20,000 g/mol, about 18,000 g/mol to about 22,000 g/mol, 15,000 g/mol to about 25,000 g/mol, about 20,000 g/mol to about 30,000 g/mol, about 30,000 g/mol to about 40,000 g/mol, about 40,000 g/mol to about 50,000 g/mol, or about 1,000 g/mol, about 2,000 g/mol, about 3,000 g/mol, about 4,000 g/mol, about 5,000 g/mol, about 7,000 g/mol, about 10,000 g/mol, about 11,000 g/mol, about 12,000 g/mol, about 14,000 g/mol, about 15,000 g/mol, about 18,000 g/mol, about 20,000 g/mol, about 22,000 g/mol, about 25,000 g/mol or less, or about 30,000 g/mol or less.

Tagging Agents

In some embodiments, the polymers disclosed above include an additional tagging agent therein. For the purposes of categorizing polymers in this disclosure, such tagging agents are not counted as a monomeric unit of the polymer for determining the categorical name of said polymer. For example, a copolymer having AA, ATBS, and a tagging agent *(e.g.,* a monomer capable of fluorescing) therein, is still referred to as a copolymer rather than adding the additional monomeric tagging agent for the purposes of the category/title and describing the polymer as a terpolymer.

In some embodiments, the scale inhibiting polymer compositions disclosed above are tagged (*e.g.*, polymerized) with a tagging agent for monitoring the polymer composition in feedstocks and/or blowdown water (*e.g.*, used coolant or produced water having the polymer therein). The tagging agent can be polymerized into any of the polymers disclosed herein. Suitable tagging agents may include one or more monomers that are naphthalene-containing, anthracene-containing, quinoline-containing, isoquinoline-containing, indole-containing, pyrene-containing, benzimidazole-containing, coumarin-containing, fluorescein-containing, quinoxaline-containing, xanthylium-containing, boron-dipyrromethene-containing, bimane-containing, rhodamine-containing, or naphthalimide-containing. Specific monomers that can be used to fluorescently tag a polymer include but are not limited to 4-methoxy-N-(3-N',N'-dimethylaminopropyl)naphthalimide (quaternary salt), N-allyl-4-(2-N',N'-dimethylaminoethoxy)naphthalimide (methyl sulfate quaternary salt), 4-methoxy-N-(3-N',N'-dimethylaminopropyl) naphthalimide (allyl chloride quaternary salt), 5-allyloxy-4'-carboxy-1,8-naphthoylene-1',2'-benzimidazole, 6-Vinylbenzyloxy-4'-carboxy-1,8-naphthoylene-1',2'-benzimidazole, 4-methoxy-N-(3-N',N'-dimethylaminopropyl)naphthalimide (2-hydroxy-3-allyloxypropyl quat), quaternary ammonium salt of dimethylaminopropylmethacrylamide and 2-(chloromethyl)quinoline, quaternary ammonium salt of dimethylaminopropylmethacrylamide and 9-(chloromethyl)anthracene, quaternary ammonium salt of dimethylaminopropylmethacrylamide and 2-(chloromethyl)benzimidazole, quaternary ammonium salt of dimethylaminopropylmethacrylamide and 4-(bromomethyl)pyrene, quaternary ammonium salt of dimethylaminopropylmethacrylamide and 1-(chloromethyl)naphthalene, any additional quaternary ammonium salt of dimethylaminopropylmethacrylamide and halo-alkyl derivative of the fluorescent chromophores previously listed, or any other fluorescent molecule capable of polymerizing with any of the above described scale inhibiting polymers. The tagging agent may constitute less than about 10 mol% of any of the polymers disclosed herein, such as less than about 1 mol%, less than about 0.1 mol%, or less than about 0.01 mol% of the polymer. The tagging agent may constitute less than about 10 wt% of the any of the polymers disclosed herein, such as about 0.01 wt% to about 10 wt%, about 1 wt% to about 3 wt%, about 4 wt % to about 6 wt%, about 7 wt % to about 10 wt%, 2 wt% to about 5 wt%, less than about 5 wt%, less than about 3 wt%, less than about 1 wt%, about 0.01 wt% to about 1 wt%, about 0.01 wt% to about 0.1 wt%, or less than about 0.1 wt% of the polymer.

When the scale inhibiting polymers herein are tagged with a tagging agent, one can determine how much scale inhibiting polymer composition is being delivered in the water source and/or how much scale inhibiting polymer composition is being exhausted during use. A fluorometer, UV spectrometer, or other fluorescent material detecting apparatus may be used to determine the amount of fluorescent tag in a water source, and by extension, the amount of tagged polymer therein. Such equipment can be used to constantly monitor the concentration of a tagged polymer in a system or can be used to monitor said concentrations on demand (e.g., randomly or at selected intervals).

### Additional monomers

In some embodiments, the scale inhibiting polymer compositions disclosed above alternatively or additionally include one or more additional monomers. Additional monomers may include hydrogen bonding or cationic monomers. For example, a polymer composition may additionally include a monomer or residue formed from a hydrogen bonding molecule and/or a cationic molecule. Such compositions may include 2-10 different monomers. Suitable hydrogen bonding molecules include, by way of example, acrylamide, methacrylamide, N-vinyl formamide, methylene bis acrylamide, triallylamine and acid salts thereof, ethylene glycol dimethacrylate, hydroxymethylacrylate, hydroxyethylacrylate, hydroxypropylacrylate, hydroxypropylmethacrylate, diethylene glycol dimethacrylate, triethylene glycol dimethylacrylate, polyethylene glycol dimethacrylate, glycidyl methacrylate, vinyl alcohol, vinyl acetate, derivatives of any of the foregoing, salts of any of the foregoing, or analogues of any of the foregoing. Suitable cationic molecules include, by way of example, dimethylaminoethyl acrylate methyl chloride tetranary salts, dimethylaminoethyl acrylate benzyl chloride tetranary salts, dimethylaminoethyl acrylate methyl sulfate tetranary salt, dimethylaminoethyl methacrylate methyl sulfate tetranary salt, dimethylaminoethyl acrylamide methyl sulfate tetranary salts, dimethylaminopropyl acrylamide methyl sulfate tetranary salts, dimethylaminopropyl methacrylamide methyl sulfate tetranary salts, diallyldimethyl ammonium chloride, dimethylaminoethyl methacrylate methyl chloride tetranary salt, dimethylaminoethyl methacrylate benzyl chloride tetranary salt, methacrylamidopropyl trimethyl ammonium chloride, acrylamidopropyl trimethyl ammonium chloride, dissociated species of any of the foregoing, or analogues of any of the foregoing. In some embodiments, any of the above listed species may be used to supply a polymerized monomer having a desired moiety (e.g., carboxylate groups) to the polymer composition. One or more of the above additional monomer species may be used in place of or in addition to any of the first, second, third, fourth, or fifth monomers disclosed herein. The additional monomers may be about 5 mol% or less of the polymer composition, such as 4 mol% or less, 3 mol%, or less, 2 mol% or less, or about 0.01 mol% to about 5 mol%, or more than about 1 mol% of the polymer composition including the same.

### Polymer Mixtures

The polymers disclosed herein may be mixed in water (e.g., tap or distilled water) and/or a water source to inhibit scale formation (e.g., deposition of alkaline and alkaline earth metal bearing scales), such as on one or more surfaces that contact the water source. The water source may include sea water, connate, produced water, brackish water, brine, a synthetic version of any of the foregoing, combinations of any of the foregoing, or any other water source having a TDS content (e.g., about 4000 ppm to about 350,000 ppm). In some embodiments, a water source can include TDS levels higher than 4,000 ppm, such as about 5,000 ppm or more (e.g., brackish water), about 10,000 ppm or more, about 15,000 ppm or more (e.g., saline water), about 30,000 ppm or more (e.g., salt water), or about 40,000 ppm or more (e.g., brine). In some embodiments, a water source (e.g., seawater) includes certain high concentrations of certain dissolved solids, such as dissolved solids likely to form scales as disclosed herein. For example, the water source may include at least about 400 ppm of calcium, at least about 390 ppm of potassium, and/or at least about 1200 ppm of magnesium, such as in seawater. The polymers disclosed herein may be particularly useful in inhibiting scale formation in brackish water, seawater, connate, and produced water. Some water sources may have varying concentrations of different dissolved solids than seawater.

An analysis of produced water from various locations of subterranean reservoirs reveals that the concentrations of ionic species varies widely across different geographic locations where subterranean reservoirs are located. A sampling of some ionic species from different produced waters and an average of some of the same ionic species in seawater is listed in Table 1. A produced water can have one or more of the following: more than about 24,000 ppm Na content, more than about 2500 Ca content, more than about 70,000 Cl content, more than about 100 ppm Ba content, more than about 50 ppm Fe content, more than about 500 ppm Mg content, and more than about 1500 ppm carbonate (carbonic acid equivalent) content.

Table 1. Concentrations of various ionic species in seawater and produced waters. Notably, "TDS" refers to all dissolved solids, including but not limited to the listed species. Blank = species not measured.

| Species | Concentration, ppm in various produced water and seawater | | | | | |
|---|---|---|---|---|---|---|
| | Sea Water | Marcellus Shale | Bakken | Wolfcamp (sample 1) | Wolfcamp (sample 2) | Permian Basin |
| Al | <2 | < 20 | | | | |
| Ba | <1 | 2900 | | | | |
| Ca | 400 | 11000 | 13177 | 3660 | 5657 | 2993 |
| Cl | 19000 | | 184500 | 71600 | 84610 | 71596 |
| Cr | | < 5 | | | | |
| Co | | 49 | | | | |
| Cu | <1 | < 5 | | | | |
| Fe | <1 | < 75 | | | | |
| HCO$_3$ | | | | 278 | 49 | |
| Mg | 1200 | 940 | 1175 | 1350 | 2224 | 598 |
| Mn | | < 5 | | | | |
| Mo | | < 130 | | | | |
| Ni | | < 30 | | | | |
| K | 380 | 190 | 5643 | | | |
| SO$_4$ | | | | 2350 | 1892 | 2028 |
| SiO$_2$ | | < 50 | | | | |
| Na | 10500 | 24000 | 85322 | 40900 | 45060 | 42785 |
| Sr | 13 | 2300 | | | | |
| Ti | | < 75 | | | | |
| V | | < 10 | | | | |
| Zn | <1 | <20 | | | | |
| TDS | 35000 | 110000 | 289817 | 120138 | 139492 | 120000 |

Scale formation may be due to scale forming components such as metals, alkaline metals, or alkaline earth metals in solution or solid form (*e.g.*, suspended and/or dissolved solids) and counter ions thereof (*e.g.*, carbonates, bicarbonates, sulfates, bisulfates, phosphates, bisphosphates, phosphates, hydroxides, etc.) in the water source. For example, seawater may have a relatively high concentration of calcium and carbonate ions as compared to freshwater, whereby use of untreated seawater in a water containing system may result in relatively greater amounts of scale formation on the equipment that contact the seawater. The polymers and polymer mixtures disclosed herein may inhibit scale formation, such as scale caused by contact of a surface with a water source containing scale cause components of calcium carbonate; magnesium carbonate; calcium sulfate; barium sulfate; barium carbonate; calcium fluoride; silicates of calcium, magnesium, aluminum, or iron; etc.; or any other scales known to form in aqueous systems. The polymer compositions disclosed above inhibit scale formation without the use of phosphorous or phosphorous containing compounds (*e.g.*, phosphates). In some embodiments, the polymer compositions disclosed herein may be used in combination with additional phosphorous containing molecules, moieties, or ions, such as phosphates or phosphonates (*e.g.*, a polymethylene phosphonate derivative). Such phosphorous containing molecules, ions or moieties may be present in any of the above polymer compositions at about 0.1 mol% to about 5 mol%, such as about 1 mol% to about 3 mol%, about 0.5 mol% to about 1.5 mol%, about 1.5 mol% to about 3 mol%, or about 3 mol% to about 5 mol%.

In use, the polymer compositions herein may be mixed in water and/or a water source to result in a polymer mixture. For example, any of the polymer compositions disclosed herein may be dispersed in water (*e.g.*, tap or deionized water) and then may be mixed in a water source. The polymer compositions herein may be mixed directly into a water source. The polymers herein may be delivered to a water source in powder form or mixed in water, and then may be mixed into the water source. Any of the polymer compositions disclosed herein may be emulsified in a water source. The polymer compositions herein may be mixed into water and/or a water source by one or more of batch-wise, continuous (*e.g.*, drip feed), or incremental addition(s) of the polymer composition, in an as-formed polymer composition or mixed into water, to the water source. In some embodiments, a water source having one or more of the scale inhibiting polymer compositions is recirculated through a portion of a water containing system such as a cooling tower, radiator, or drill string and may be augmented with an additional or supplemental amount of scale inhibiting polymer composition. Such augmentation may be monitored and controlled by tracking one or more tagging agents in the polymers as described above.

One or more of the scale inhibiting polymer compositions may be mixed in the water source in any one of various dosages. For example, a polymer composition may be mixed in water and/or a water source to arrive at a dosage of about 0.01 ppm or more, such as about 0.01 ppm to about 1000 ppm, about 0.05 ppm to about 200 ppm, about 0.1 ppm to about 100 ppm, about 0.2 ppm to about 50 ppm, about 0.01 ppm to about 1 ppm, about 1 ppm to about 5 ppm, about 5 ppm to about 10 ppm, about 10 ppm to about 20 ppm, about 20 ppm to about 30 ppm, about 30 ppm to about 40 ppm, about 40 ppm to about 50 ppm, about 50 ppm to about 80 ppm, about 80 ppm to about 100 ppm, about 100 ppm to about 200 ppm, about 200 ppm to about 500 ppm, about 0.01 ppm to about 10 ppm, about 0.1 ppm to about 20 ppm, or about 0.5 ppm to about 10 ppm. The dosage may be more than about 0.01 ppm and less than about 200 ppm, such as less than about 100 ppm, less than about 50 ppm, less than about 20 ppm, less than about 10 ppm, less than about 5 ppm, or less than about 2 ppm. Any of the above listed dosages may be an effective amount to substantially inhibit or prevent scale formation in a water containing system utilizing a water source having high TDS therein. The polymer compositions may be mixed into water and/or the water source in batch-wise or continuous feeds in amount less than the dosage, such as in a fraction of the dosage per unit time. Examples of such a mixing scheme may include adding one tenth of the total dosage over ten evenly spaced intervals (*e.g.,* 1 to 10 minute intervals); adding half of the dosage at a beginning point and the other half after an interval has passed; a continuous feed configured to arrive at the desired dosage after a selected amount of time, such as about 1 hour to about 1 day; or the like. The polymer compositions or polymer compositions mixed in water may be mixed in the make-up water source fed into the system or may be mixed into the water source in the system (in-situ).

Systems

The scale inhibiting polymer compositions and polymer mixtures disclosed herein may be used in a water containing system. For example, the scale inhibiting polymer compositions and polymer mixtures disclosed herein may be used in any water containing system, such as desalination systems, cooling systems (*e.g.*, cooling towers, radiators, heat pipes, etc.), pipes, drilling equipment (*e.g.*, drill strings, drilling mud, etc.), fracking and fracking equipment, paper or pulp processing systems, wastewater treatment systems, water purification systems, ware washing, evaporators, condensers, filtration, mining, water softening, kamyr digesters, pumps, storage vessels, or any other systems using water sources or that contact one or more surfaces therein. During use, as the scale forming content of the water sources concentrate (*e.g.*, through evaporation) and/or thermal shock occurs, scale deposits on the surfaces of water containing systems from the water sources in contact therewith. Such surfaces may include the interior of pipes, storage vessels, radiators, heat pipes, filters, digesters, condensers, the exterior of cooling towers, or any other surface that contacts a water source. The surfaces of the water containing systems may include metals, plastics, glass, rubber or latex, fiberglass, concrete or stone, or any other material suitable to hold, transport, or filter water.

In an embodiment, the water source is seawater, connate, produced water, or brine and the water containing system utilizing one or more of the scale inhibiting polymer compositions is a cooling system including one or more of a water jacket, radiators, pipes, heat pipes, pumps, a cooling tower, etc. As the seawater circulates through the water containing system and is evaporated on one or more portions thereof, the TDS content gradually concentrates with each cycle through the system. The scale forming materials therein may reach a concentration where they begin to form scale on the surfaces in contact therewith, if left untreated. One or more of the scale inhibiting polymer compositions or polymer mixtures may be added therein and function to inhibit or prevent scale (*e.g.,* calcium carbonate or calcium sulfate scale) formation caused by the dissolved solids in the salt water. Such a polymer mixture may prevent or inhibit calcium carbonate or other scaling or deposition in pipes, pumps, compressors, heat exchange surfaces (e.g., radiators or water jackets), or any other parts of the water containing system.

In an embodiment, the water source includes fresh water (*e.g.,* tap water) and the water containing system utilizing one or more of the scale inhibiting polymer compositions is a cooling system including one or more of a water jacket, radiators, pipes, heat pipes, at least one pump, a cooling tower, etc. As the fresh water circulates through the water containing system and is evaporated in one or more portions thereof, the relatively low TDS content gradually concentrates with each cycle through the system. The scale forming materials therein may reach a TDS concentration of a water source as defined above and/or reach a concentration where they begin to form scale on the surfaces in contact therewith, if left untreated. One or more of the scale inhibiting polymer compositions or polymer mixtures may be added therein and function to inhibit or prevent scale (*e.g.*, calcium carbonate or calcium sulfate scale) formation caused by the dissolved solids in the fresh water. Such a polymer mixture may prevent or inhibit calcium carbonate or other scaling or deposition in pipes, pumps, compressors, heat exchange surfaces (*e.g.*, radiators or water jackets), or any other parts of the water containing system.

The water source and scale inhibiting polymer composition may be maintained in a closed system or an open system, augmented with additional water from outside the system (*e.g.,* make-up water), and/or may be circulated out of the system (*e.g.,* blow-down water) and replaced with additional water and/or scale inhibiting polymer composition from outside the system. Such maintenance, augmentation, and removal of the water source and/or polymer mixture allows a user to selectively control the concentration of polymer composition in the water source and/or amount of scale in the water containing system.

Methods

In an embodiment, a method of inhibiting scale formation includes providing or forming a scale inhibiting polymer composition (*e.g.*, a composite polymer), such as any of those disclosed herein. The method may include providing a water source, such as any water source disclosed herein. The method includes mixing one or more of the scale inhibiting polymers in the water source. Mixing may include forming one or more of a dispersion, an emulsion, or a solution of the scale inhibiting polymer composition and water. Mixing may include forming one or more of a dispersion, an emulsion, or a solution of the scale inhibiting polymer composition and the water source, or may include mixing the scale inhibiting polymer composition in water and then mixing the same into the water source. Mixing may include one or more of batch wise (*e.g.*, an individual aliquot), continuous (*e.g.,* drip-feed, spray feed), or incremental (*e.g.,* supplemental, on-demand, or monitored) additions. Mixing may include disposing one or more scale inhibiting polymers in the water source in any of the dosages disclosed herein. Mixing may include disposing one or more scale inhibiting polymers in water and then into the water source in any of the dosages disclosed herein.

The method includes applying the scale inhibiting polymer mixture to a water containing system. Applying the scale inhibiting polymer mixture may include circulating the polymer mixture through the water containing system, such as any water containing system or component thereof disclosed herein. For example, the polymer mixture may be circulated through a water jacket or piping. In an embodiment, the method includes recirculating the polymer mixture through the water containing system and selectively augmenting the scale inhibiting polymer content and/or water in the system to maintain, decrease, or increase the concentration of the scale inhibiting polymer in the polymer mixture. The composition of the scale-inhibiting polymer mixture may be monitored, during use, by use of tagging agent (*e.g.,* fluorescent tag) and equipment (*e.g.,* fluorometer) to determine the concentration of polymer composition in the water source. Forming a scale inhibiting polymer may include any of the techniques disclosed below in the working examples.

The scale inhibiting polymers herein may be used to achieve or maintain a selected COC in a water containing system without any scale formation, and optionally, at a particular dosage of the polymer composition or mixture thereof. For example, the method of inhibiting scale formation may include maintaining at least 1.1 COC without any scale formation, such as about 1.1 COC to about 10 COC, about 1.2 COC to about 3 COC, about 1.5 COC to about 3.5 COC, about 2 COC to about 4 COC, about 2 COC to about 5 COC, about 1 COC to about 2 COC, about 1.2 COC to about 2.2 COC, about 1.0 COC to about 2.5 COC, about 1.5 COC to about 3.0 COC, about 1.5 COC to about 2.0 COC, about 2.0 COC to about 2.5 COC, about 1.2 COC to about 2.0 COC, about 3 COC to about 5 COC, less than about 5 COC, less than about 3 COC, less than about 2.5 COC, more than about 3.0 COC, more than about 2.5 COC, more than about 2.0 COC, more than about 1.5 COC, more than about 1.4 COC, or more than about 1.1 COC without any scale formation. The dosage for maintaining the COC at the levels disclosed above without scale formation may include any of those dosages disclosed herein, such as about 0.1 ppm to about 50 ppm, about 10 ppm or less, or about 1 ppm or less, by way of example. The scale inhibiting polymer compositions disclosed herein unexpectedly prevented scale formation in relatively low dosages compared to commercially available scale inhibitors.

In some embodiments, even when scale formation is observed, the extent of the scale formation may be reduced at a specific COC compared to other scale inhibiting compositions, and at lower dosages, when any of the polymer compositions described above are mixed therein. Such COC and/or dosages may be similar or identical to any of those disclosed herein.

Working Examples 1-8

Eight working examples were synthesized for scale inhibiting tests. Some of the working examples were synthesized as described below. Only working examples 2 and 3 are according to the invention.

Comparative working example 1 of a scale inhibiting (composite) polymer was formed as described below. Deionized water (290.54 g), itaconic acid (18.50 g), and 50% sodium hydroxide solution (23.75 g) were added to a one and a half liter reactor vessel with overhead paddle stirring, a nitrogen inlet, and a condenser. This mixture was stirred at 700 rpm, heated to 95 degrees Celsius, and purged with nitrogen gas at 1.5 L/min for 30 minutes. A solution of sodium persulfate ("SPS") (7.87 g) in water (20.0 g) was prepared by stirring.

Four semi-batch feeds were prepared for addition to the reactor. The SPS solution was added to the reactor over 205 minutes, a 40% sodium metabisulfite ("SMBS") solution (214.62 g) was added to the reactor over 185 minutes, AA (312.65 g) was added to the reactor over 180 minutes, a 50% ATBS solution (70.30 g) was added to the reactor over 180 minutes.

The addition of the SPS and SMBS solution feeds were started. After five minutes had elapsed, the AA feed and the ATBS feed were started. The AA feed, ATBS feed, and SMBS feed all finished at the same time (185 minutes elapsed). The SPS feed continued for 20 minutes after the other feeds finished. After completion of the SPS feed (205 minutes elapsed), the reaction temperature was held at 95 degrees Celsius for 30 minutes and then cooled to room temperature. The resulting scale inhibiting polymer (comparative working example 1) consisted of residues of AA (93.3 mol%), ATBS (3.7 mol%), itaconic acid (3 mol%), with a molecular weight of about 18,000 g/mol.

Working example 3 of a scale inhibiting (composite) polymer was formed as described below. Deionized water (226.37 g), itaconic acid (12.00 g), and 50% sodium hydroxide solution (15.46 g) were added to a one and a half liter reactor vessel fitted with overhead paddle stirring, a nitrogen inlet, and a condenser. The deionized water, itaconic acid, and sodium hydroxide solution was stirred at 700 rpm, heated to 95 degrees Celsius, and purged with nitrogen gas at 1.5 L/min for 30 minutes. A solution of SPS (8.36 g) in water (20.0 g) was prepared by stirring. A mixture of tert-butylacrylamide (8.00 g) in AA (338.0 g) was prepared by stirring.

Four semi-batch feeds were prepared for addition to the reactor; the times of addition for each feed are as follows. The SPS solution was added to the reactor over 205 minutes, a 40% SMBS solution (182.76 g) was added to the reactor over 185 minutes, the AA/tert-butyl acrylamide mixture was added to the reactor over 180 minutes, and a 50% ATBS solution (84.06 g) was added to the reactor over 180 minutes.

Addition of the SPS and SMBS solution feeds was started. After five minutes, the AA/tert-butyl acrylamide feed and the ATBS feed were started. The AA/tert-butyl acrylamide feed, ATBS feed, and SMBS feed all finished at about the same time (about 185 minutes elapsed). The SPS feed continued for 20 minutes after the other feeds finished. After completion of the SPS feed (205 minutes elapsed), the reaction temperature was held at 95 degrees Celsius for 30 minutes and then cooled to room temperature. The resulting scale inhibiting polymer (working example 3) consisted of residues of AA (93.3 mol%), ATBS (3.7 mol%), itaconic acid (1.8 mol%), and tert-butyl acrylamide (1.2 mol%), with a molecular weight of about 14,000 g/mol.

Comparative working example 4 of a scale inhibiting (composite) polymer was formed as described below. Deionized water (283.47g) was added to a one and a half liter reactor vessel fitted with overhead paddle stirring, a nitrogen inlet, and a condenser. The deionized water was stirred at 700 rpm, heated to 95 degrees Celsius, and purged with nitrogen gas at 1.5 L/min for 30 minutes. A solution of SPS (7.87 g) in water (20.0 g) was prepared by stirring. Four semi-batch feeds were prepared for addition to the reactor. The SPS solution was added to the reactor over 205 minutes, a 40% SMBS (171.70 g) was added to the reactor over 185 minutes, the AA (331.15 g) was added to the reactor over 180 minutes, and a 50% ATBS solution (70.30 g) was added to the reactor over 180 minutes.

Addition of the SPS and SMBS solution feeds was started. After five minutes, the AA feed and the ATBS feed were started. The AA feed, ATBS feed, and SMBS feed all finished at about the same time (about 185 minutes elapsed). The SPS feed continued for 20 minutes after the other feeds finished. After completion of the SPS feed (205 minutes elapsed), the reaction temperature was held at 95 degrees Celsius for 30 minutes and then cooled to room temperature. The resulting scale inhibiting polymer (comparative working example 4) consisted of residues of AA (96.4 mol%) and ATBS (3.6 mol%), with a molecular weight of about 9,400 g/mol.

Comparative working example 6 of a scale inhibiting (composite) polymer was formed as described below. Deionized water (365.71 g) was added to a one and a half liter reactor vessel fitted with overhead paddle stirring and a nitrogen inlet. This water was stirred at 700 rpm, heated to 95 degrees Celsius, and purged with nitrogen gas at 1.5 L/min for 30 minutes. A solution of SPS (7.87 g) in water (20.0 g) was prepared by stirring. Four semi-batch feeds were prepared for addition to the reactor; the times of addition for each feed are as follows. The SPS solution was added to the reactor over 205 minutes, a 40% SMBS solution (171.70 g) was added to the reactor over 185 minutes, AA (349.65 g) was added to the reactor over 180 minutes, a 50% ATBS solution (33.30 g) was added to the reactor over 180 minutes.

The addition of the SPS and SMBS solution feeds were started. After five minutes had elapsed, the AA feed and the ATBS feed were started. The AA feed, ATBS feed, and SMBS feed all finished at the same time (185 minutes elapsed). The SPS feed continued for 20 minutes after the other feeds finished to eliminate residual unreacted monomer. After completion of the SPS feed (205 minutes elapsed), the reaction temperature was held at 95 degrees Celsius for 30 minutes and then cooled to room temperature. The resulting scale inhibiting polymer (comparative working example 6) consisted of residues of AA (98.4 mol%) and ATBS (1.6 mol%), with a molecular weight of about 9,000 g/mol.

Comparative working example 7 of a scale inhibiting (composite) polymer was formed as described below. Deionized water (342.93 g), itaconic acid (11.10 g), and 50% sodium hydroxide solution (14.29 g) was added to a one and a half liter reactor fitted with overhead paddle stirring, a nitrogen inlet, and a condenser. This mixture was stirred at 700 rpm, heated to 95 degrees Celsius, and purged with nitrogen gas at 1.5 L/min for 30 minutes. A solution of SPS (7.87 g) in water (20.0 g) was prepared by stirring. A mixture of dimethylacrylamide (7.40 g) in AA (312.65 g) was prepared by stirring. Four semi-batch feeds were prepared for addition to the reactor; the times of addition for each feed are as follows. The SPS solution was added to the reactor over 205 minutes, a 40% SMBS solution (171.70 g) was added to the reactor over 185 minutes, the AA/dimethylacrylamide mixture was added to the reactor over 180 minutes, a 50% ATBS solution (70.30 g) was added to the reactor over 180 minutes.

The addition of the SPS and SMBS solution feeds were started. After five minutes had elapsed, the AA/dimethylacrylamide feed and the ATBS feed were started. The AA/dimethyl acrylamide feed, ATBS feed, and SMBS feed all finished at the same time (185 minutes elapsed). The SPS feed continued for 20 minutes after the other feeds finished to eliminate residual unreacted monomer. After completion of the SPS feed (205 minutes elapsed), the reaction temperature was held at 95 degrees Celsius for 30 minutes and then cooled to room temperature. The resulting scale inhibiting polymer (comparative working example 7) consisted of AA (92.9 mol%), ATBS (3.6 mol%), itaconic acid (1.8 mol%), and dimethylacrylamide (1.6 mol%), with a molecular weight of about 22,000 g/mol.

Additional molecular weight variants of the some of the polymers above and different polymer compositions were also synthesized. Polymer compositions synthesized identically or similarly as above were evaluated for their performance using a standard bench scale test protocol with a synthetic sea water composition prepared in a lab.

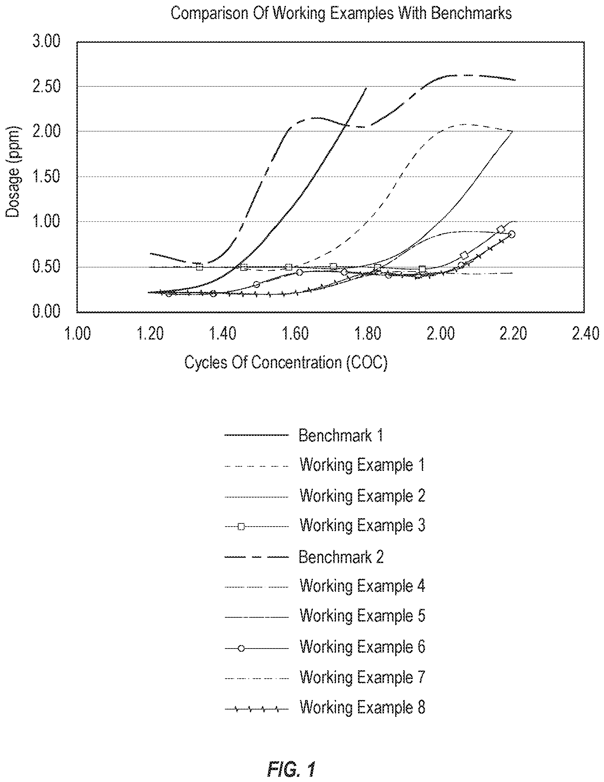

FIG. 1 is a graph of dosage in ppm versus COC of the different scale inhibitors in synthetic seawater.

Benchmark 1 is HEDP, a commercially available phosphonate based scale inhibitor molecule hydroxyethylidene-1-1-diphosphonic acid. Benchmark 2 is Belclene® 810, a commercially available antiscalant product comprised of maleic acid, alkyl acrylate, and vinyl acetate, obtained from BWA Water Additives of Tucker, Georgia. Comparative working example 1 is a terpolymer including about 93.3 mol% (85 wt%) AA, 3.7 mol% (10 wt%) ATBS, and about 3 mol% (5 wt%) itaconic acid, with a molecular weight of about 18,000 g/mol. Working example 2 is a polymer including about 93.3 mol% (85 wt%) AA, about 3.7 mol% (10 wt%) ATBS, about 1.8 mol% (3 wt%) itaconic acid, about 1.2 mol% (2 wt%) tert-butyl acrylamide, with a molecular weight of about 11,000 g/mol. Working example 3 is the same composition of working example 2 with a molecular weight of about 14,000 g/mol. Comparative working example 4 is about 96.4 mol% (90 wt%) AA, about 3.6 mol% (10 wt%) ATBS, with a molecular weight of about 9,400 g/mol. Comparative working example 5 is the same composition as comparative working example 1, with a molecular weight of about 14,000 g/mol. Comparative working example 6 is about 98.4 mol% (95 wt%) AA and about 1.6 mol% (5 wt%) ATBS, with a molecular weight of about 9,000 g/mol. Comparative working example 7 is about 92.9 mol% (85 wt%) AA, about 3.6 mol% (10 wt%) ATBS, about 1.8 mol% (3 wt%) itaconic acid, and about 1.6 mol% (2 wt%) dimethylacrylamide, with a molecular weight of about 22,000 g/mol. Comparative working example 8 is the same composition as comparative working example 7, with a molecular weight of about 20,000 g/mol.

Table 2. Polymer compositions of working examples 1-8 in mol% and the corresponding molecular weights of each polymer composition.

| Working Example # | Polymer composition (mol%) | | | | MW (g/mol) |
|---|---|---|---|---|---|
| | 1st Monomer | 2nd Monomer | 3rd Monomer | 4th Monomer | |
| 1 | 93.3% Acrylic acid | 3.7% ATBS | 3% itaconic acid | | 18,000 |
| 2 | 93.3% Acrylic acid | 3.7% ATBS | 1.8% itaconic acid | 1.2% tert-butyl acrylamide | 11,000 |
| 3 | 93.3% Acrylic acid | 3.7% ATBS | 1.8% itaconic acid | 1.2% tert-butyl acrylamide | 14,000 |
| 4 | 96.4% acrylic acid | 3.6% ATBS | | | 9,400 |
| 5 | 93.3% Acrylic acid | 3.7% ATBS | 3% itaconic acid | | 14,000 |
| 6 | 98.4% acrylic acid | 1.6% ATBS | | | 9,000 |
| 7 | 92.9% acrylic acid | 3.6% ATBS | 1.8% itaconic acid | 1.6% dimethyl acrylamide | 22,000 |

(continued)

| Working Example # | Polymer composition (mol%) | | | | MW (g/mol) |
|---|---|---|---|---|---|
| | 1st Monomer | 2nd Monomer | 3rd Monomer | 4th Monomer | |
| 8 | 92.9% acrylic acid | 3.6% ATBS | 1.8% itaconic acid | 1.6% dimethyl acrylamide | 20,000 |

The above listed working examples and benchmarks were each mixed with synthetic seawater consisting of about 40 ml of anionic content, about 40 ml of cationic content (*e.g.*, calcium ions) and adjusted to a pH of about 8.6. The TDS content of the synthetic seawater is included in Table 3 below.

Table 3. TDS content of synthetic seawater.

| Ion | Concentration (ppm) |
|---|---|
| Na | 9100 |
| Ca | 1100 |
| Mg | 5600 |
| K | 370 |
| Cl | 22700 |
| $SO_4$ | 3300 |
| $HCO_3$ | 130 |

The COC for the tests were determined based on the above base levels (1 COC) of the synthetic salt water. For example 2 COC was calculated to have the equivalent of the same TDS content as the base level with half the volume of water. Numerous standard samples were made having COCs from 1.0 COC to 2.2 COC. After mixing, the samples were filtered through filter paper having a 45 $\mu$m pore size. After drying, the filter paper, including the solids thereon, was weighed. The filter paper was then cleaned with hydrochloric acid, dried at 50 degrees C for about 24 hours, and reweighed. The difference between the weights of the solids-bearing and clean filter paper determined the amount of solids in each sample, and corresponded to a specific COC. The amount difference between the weight of the solids-bearing filter paper and the clean filter paper was used to determine a percent inhibition (% inhibition) of scale formation. The % inhibition compares the amount of solids on the filter paper of the test sample to the amount of solids in an untreated sample of the same calculated COC. If the (polymer composition treated) test sample showed the same amount of solids on the filter paper as the untreated sample, then it was inferred that substantially no solids deposited out of solution as scale and the % inhibition was 100% and the particular dosage and/or polymer composition in the sample was effective to inhibit scale formation for that particular COC. If the solids content on the filter paper of the test sample was lower than the solids content on the filter paper of the untreated sample, then the % inhibition was lower than 100% and the particular dosage and/or polymer composition was not effective to completely inhibit scale formation at the given COC.

The COC for each sample and standard was also calculated from the calcium content therein, as determined by measuring the conductivity of each sample as known in the art. A similar comparison of standards versus the test samples to determine % inhibition could be made using the conductivity measurements. The presence of scales was also visually (*e.g.*, both the naked eye and under magnification) checked by inspecting the glass surfaces of the sample vials. If scaling was present the sample was determined not to be 100% inhibiting at that specific COC.

The working examples and benchmarks were each mixed in the various synthesized seawater samples (*e.g.*, various synthesized COCs) in various dosages. The final volume of the tested mixtures was about 90 ml. The mixtures were shaken in a water bath maintained at about 55 degrees Celsius for about 24 hours, and then tested as disclosed above.

**FIG. 1** shows performance data (dosage curve) for working examples 1-8 compared to benchmarks 1 and 2. All the polymers of working examples 1-8 showed better performance than benchmarks 1 and 2, with each working example having a wider operational window than Benchmarks 1 and 2 (benchmark 1 is only operational up to about 1.8 COC) in terms of having a much lower dosage demand. For example, working examples 3 (tetrapolymer) and 6-8 (copolymer and tetrapolymers, respectively) only required a 0.5 ppm dosage to maintain about 2 COC, whereas benchmarks 1 and 2 required at least 5 times more (2.5 ppm) to maintain about 2 COC. The objective of these tests was to develop a dosage model for the polymers in the working examples as a function of their dosage (as active ppm) against COC of sea water cooling systems. The unexpectedly low dosages show the efficiency of the polymer compositions herein at inhibiting scale formation over a wide range of COC. Some of the polymers with lowest dosage demand at the highest COC were selected as exemplary polymers for further testing.

Two exemplary polymers were working examples 3 and 6. Working examples 3 and 6 were tested in seawater obtained from the Red Sea and compared to the synthetic seawater tests of the same polymers. The polymers of working examples 3 and 6 were added to the seawater until dosages of 0.5 ppm, 1 ppm, and 2 ppm were reached, respectively. The samples were placed in a rotary evaporator and rotated therein at about 60 degrees Celsius until a desired total dissolved solids content per unit volume of water indicative of a specific COC was reached. The conductivity of each sample was measured after the sample reached about 40 degrees Celsius. Each sample was then shaken in a shaker bath for about 24 hours and checked for visual signs of scaling on the sample container. The COC for each was then calculated from the calcium content therein, as determined by an inductively coupled plasma optical emission spectrometry ("ICP-OES") analysis of each sample.

The % inhibition of each sample was calculated from the ICP-OES determined calcium content. The % inhibition using the ICP-OES data compares the amount of calcium ions in the test sample to the amount of calcium ions in an untreated sample of the same calculated COC. If the (polymer composition treated) test sample showed the same amount of calcium ions as the untreated sample, then the % inhibition was 100% and the particular dosage and/or polymer composition in the sample was effective to inhibit scale formation for that particular COC. If the calcium ion content of the test sample was lower than the calcium ion content of the untreated sample, then the % inhibition was lower than 100% and the particular dosage and/or polymer composition was not effective to completely inhibit scale formation at the given COC. The % inhibition of each sample was calculated from the following equation 1:

$$\underline{\text{Equation 1}}: \quad \% \text{ Inhibition} = ((Ca_E - Ca_o)/(Ca_T - Ca_o)) \, 100 \, \%$$

$Ca_E$ = Calcium hardness (ppm as CaCO3) for polymer treated test sample (at a particular COC)
$Ca_o$ = Calcium hardness (ppm as CaCO3) for untreated (blank or 1 COC) test sample
$Ca_T$ = Calcium hardness (ppm as CaCO3) for a reference standard solution (e.g., corresponding to the particular COC of the test sample $Ca_E$).

The presence of scales was also visually checked as disclosed above, to qualitatively determine % inhibition at a specific COC.

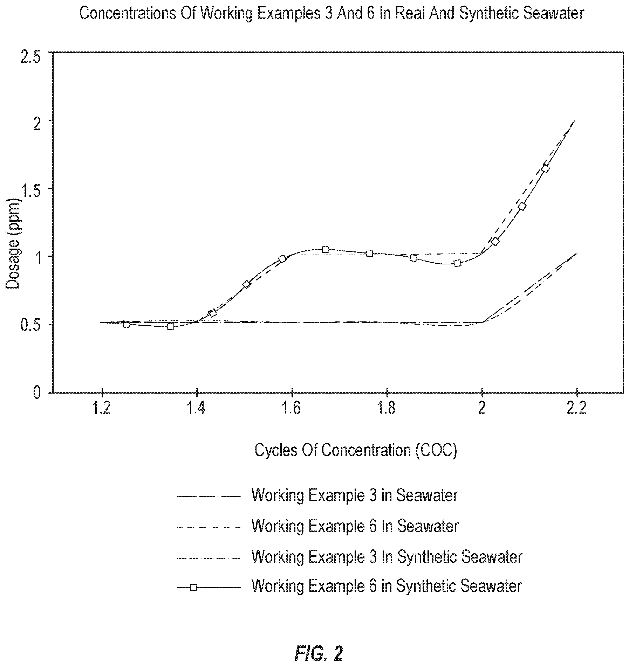

**FIG. 2** is a graph of the dosage (in ppm) of working examples 3 and 6 in real seawater and synthetic seawater samples and the COC corresponding thereto. Sea water has additional factors such as high total suspended solids (TSS), macrofoulants, silt, clay etc. therein. Despite these additional factors, the results of the real seawater tests showed a similar dosage model as the synthetic sea water tests. As shown, the performance of working examples 3 and 6 is substantially identical in synthetic seawater and seawater.

Further testing was carried out using working examples 3 and 4 (as described above) to determine effect of a relatively low dosage of working examples 3 and 4 on the associated COCs. Working examples 3 and 4 were tested as described above with respect to **FIG. 1**, including identical compositions to those in Tables 2 and 3. Working examples 3 and 4 were tested at various concentrations from 0.4 ppm to about 2 ppm in synthetic seawater (as disclosed above). Both working examples 3 and 4 demonstrated 100% inhibition of scales at up to 1.4 COC in synthetic seawater at the extremely low concentration of about 0.4 ppm. Working example 3 (tetrapolymer) demonstrated 100% inhibition at concentrations between about 0.4 ppm and about 0.5 ppm at up to 2 COC, while 1 ppm demonstrated the ability to inhibit scale deposition at 2.2 COC in synthetic seawater. Comparative working example 4 (co-polymer) demonstrated 100% inhibition at 1 ppm and up to 2 COC. Comparative working example 4 also demonstrated 100% inhibition at 2 ppm at up to 2.2 COC.

Working example 3 (tetrapolymer) was tested for scale inhibition against Benchmark 1 at 0.5 ppm (active component concentrations) respectively, in separate samples and in a solution of synthetic seawater (as disclosed above) at 1.2 COC. Bench scale test protocol is followed to evaluate the scale inhibition performance of the polymers. The synthetic water is then transferred into 100 ml glass bottles, in which the scale inhibitor polymer samples were dosed in the above noted concentrations. The solutions were then placed in a shaker water bath where the temperature is maintained for 24-48 hours at 55°C. After the heating cycle is complete, water chemistry from the bottles are tested by visual inspection for appearance of any deposit (indication of scale formation) and then analyzed for soluble calcium hardness, alkalinity and pH. Scale inhibition rate is calculated based on the calcium hardness data as compared to the bottles containing no scale inhibiting polymer and the initial amount added. The scale deposition rate of Benchmark 1 was observed to be about 12.461 mg/cm$^2$/year on the first tube, and the scale deposition rate of the second tube was determined to be 14.211 mg/cm$^2$/year. The scale deposition rate of working example 3 was observed to be less than 1 mg/cm$^2$/year on both tubes. Additionally, the solutions or working example 3 and the Benchmark 1 were passed over carbon steel tubes. The tubes were observed qualitatively for the extent of scaling. The tubes exposed to working example 3 displayed little to no scaling, while the tubes exposed to Benchmark 1 showed significant scale deposition.

**Claims**

1. A scale inhibiting polymer mixture, comprising:

   a water source comprising 4000 ppm to 350,000 ppm total dissolved solids; and
   about 0.05 ppm to about 200 ppm of a polymer composition, the polymer composition comprising:
   about 55 mol% to about 99 mol% of a first monomer comprising a residue of one of:

      acrylic acid, a salt thereof, or a conjugate base thereof,
      maleic acid, a salt thereof, or a conjugate base thereof, or
      methacrylic acid, a salt thereof, or a conjugate base thereof;
      about 0.01 mol% to about 45 mol% of a second monomer comprising a residue of one of:

         2-acrylamido-2-methylpropane sulfonic acid, a salt thereof or a conjugate base thereof,
         maleic acid, a salt thereof or a conjugate base thereof,
         methacrylic acid, a salt thereof or a conjugate base thereof,
         sulfostyrene, or
         a methallyl sulfonate,
         wherein the first monomer is chemically different from the second monomer,
         about 0.01 mol% to about 5 mol% of a third monomer, wherein the third monomer comprises a residue of tert-butylacrylamide,
         optionally about 0.01 mol% to about 10 mol% of a fourth monomer, wherein the fourth monomer comprises a residue that is chemically different from the first monomer, the second monomer, and the third monomer; and
         optionally about 0.01 mol% to about 10 mol% of a fifth monomer, wherein the fifth monomer comprises a residue that is chemically different from the first monomer,
         the second monomer, the third monomer and the fourth monomer.

2. The scale inhibiting polymer mixture of claim 1 wherein the first monomer is about 85 mol% to about 97 mol% of the polymer composition and the second monomer is about 1 mol% to about 5 mol% of the polymer composition.

3. The scale inhibiting polymer mixture of claim 1 or claim 2 wherein:

   the fourth monomer is one of 2-acrylamido-2-methylpropane sulfonic acid itaconic acid, crotonic acid, or a conjugate base thereof, an alkylated molecule or
   a conjugate base thereof, or dimethyl acrylamide.

4. The scale inhibiting polymer mixture of any one of claims 1 to 3 wherein the fifth monomer is acrylic acid, maleic acid, methacrylic acid, itaconic acid, or crotonic acid.

5. The scale inhibiting polymer mixture of claim 1 wherein the first monomer is acrylic acid, a salt thereof, or a conjugate base thereof; the second monomer is 2-acrylamido-2-methylpropane sulfonic acid, a salt thereof, or a conjugate base thereof.

6. The scale inhibiting polymer mixture of claims 5, wherein the polymer composition is a terpolymer comprising the first, second and third monomer and comprising about 90 mol% to about 98 mol% of the first monomer and about 0.01 mol% to about 7 mol% of the second monomer; or wherein the polymer composition is a tetrapolymer comprising the first, second, third and fourth monomer and comprising about 90 mol% to about 98 mol% of the first monomer and about 0.01 mol% to about 8 mol% of the second monomer; or wherein the polymer composition is a pentapolymer comprising the first, second, third, fourth and fifth monomer and comprising about 90 mol% to about 97 mol% of the first monomer and about 1 mol% to about 7 mol% of the second monomer.

7. A method of inhibiting scale formation in water containing systems, using the polymer composition of claim 1, the method comprising:
adding about 0.05 ppm to 1000 ppm of a polymer composition to a water source to form a scale inhibiting polymer mixture, the polymer composition comprising:
about 0.05 ppm to about 200 ppm of a polymer composition, the polymer composition comprising: about 55 mol% to about 99 mol% of a first monomer comprising a residue of one of:

acrylic acid, a salt thereof, or a conjugate base thereof,
maleic acid, a salt thereof, or a conjugate base thereof, or
methacrylic acid, a salt thereof, or a conjugate base thereof;
about 0.01 mol% to about 45 mol% of a second monomer comprising a residue of one of:
2-acrylamido-2-methylpropane sulfonic acid, a salt thereof or a conjugate base thereof,
maleic acid, a salt thereof or a conjugate base thereof,
methacrylic acid, a salt thereof or a conjugate base thereof, sulfostyrene, or
a methallyl sulfonate,
wherein the first monomer is chemically different from the second monomer,
about 0.01 mol% to about 5 mol% of a third monomer, wherein the third monomer comprises a residue of tert-butylacrylamide,
optionally about 0.01 mol% to about 10 mol% of a fourth monomer, wherein the fourth monomer comprises a residue that is chemically different from the first monomer, the second monomer, and the third monomer; and
optionally about 0.01 mol% to about 10 mol% of a fifth monomer, wherein the fifth monomer comprises a residue that is chemically different from the first monomer,
the second monomer, the third monomer and the fourth monomer; and
applying the scale inhibiting polymer mixture to a water containing system.

8. The method of claim 7 wherein the scale inhibiting polymer mixture is formed by adding about 0.2 ppm to about 50 ppm of the polymer composition to the water source.

9. The method of claims 7 or 8, wherein the water containing system includes one or more of a cooling tower, a radiator, one or more pipes, a water jacket, a desalination membrane, a condenser, an evaporator, a pump, or a storage vessel.

10. A water containing system including a scale inhibiting polymer mixture of any of claims 1-6 therein in a concentration of about 0.1 ppm to about 20 ppm.

11. The water containing system of claim 10 wherein the scale inhibiting polymer mixture provides greater than 2 cycles of concentration of without any scale formation.

12. Use of the scale inhibiting polymer mixture of any of claims 1-6 to inhibit scale formation in a water containing system.

**Patentansprüche**

1. Kesselsteinverhindernde Polymermischung, die Folgendes umfasst:

eine Wasserquelle, die 4000 ppm bis 350.000 ppm gelöste Gesamtfeststoffe umfasst; und
etwa 0,05 ppm bis etwa 200 ppm einer Polymerzusammensetzung, wobei die Polymerzusammensetzung Folgendes umfasst:
etwa 55 Mol-% bis etwa 99 Mol-% eines ersten Monomers, das einen Rest von Folgendem aufweist:

Acrylsäure, einem Salz davon oder einer konjugierten Base davon, Maleinsäure, einem Salz davon oder einer konjugierten Base davon, oder
Methacrylsäure, einem Salz davon oder einer konjugierten Base davon;
etwa 0,01 Mol-% bis etwa 45 Mol-% eines zweiten Monomers, das einen Rest von Folgendem aufweist:

2-Acrylamido-2-methylpropansulfonsäure, einem Salz davon oder einer konjugierten Base davon,
Maleinsäure, einem Salz davon oder einer konjugierten Base davon, Methacrylsäure, einem Salz davon oder einer konjugierten Base davon, Sulfostyrol, oder
einem Methallylsulfonat,

wobei sich das erste Monomer chemisch von dem zweiten Monomer unterscheidet,
etwa 0,01 Mol-% bis etwa 5 Mol-% eines dritten Monomers, wobei das dritte Monomer einen Rest von tert-Butylacrylamid umfasst,
optional etwa 0,01 Mol-% bis etwa 10 Mol-% eines vierten Monomers, wobei das vierte Monomer einen Rest umfasst, der sich chemisch von dem ersten Monomer, dem zweiten Monomer und dem dritten Monomer unterscheidet; und
optional etwa 0,01 Mol-% bis etwa 10 Mol-% eines fünften Monomers, wobei das fünfte Monomer einen Rest umfasst, der sich chemisch von dem ersten Monomer, dem zweiten Monomer, dem dritten Monomer und dem vierten Monomer unterscheidet.

2. Kesselsteinverhindernde Polymermischung nach Anspruch 1, wobei das erste Monomer etwa 85 Mol-% bis etwa 97 Mol-% der Polymerzusammensetzung ausmacht und das zweite Monomer etwa 1 Mol-% bis etwa 5 Mol-% der Polymerzusammensetzung ausmacht.

3. Kesselsteinverhindernde Polymermischung nach Anspruch 1 oder 2, wobei:
das vierte Monomer 2-Acrylamido-2-methylpropansulfonsäure, Itaconsäure, Crotonsäure oder eine konjugierten Base davon, ein alkyliertes Molekül oder eine konjugierte Base davon oder Dimethylacrylamid ist.

4. Kesselsteinverhindernde Polymermischung nach einem der Ansprüche 1 bis 3, wobei das fünfte Monomer Acrylsäure, Maleinsäure, Methacrylsäure, Itaconsäure oder Crotonsäure ist.

5. Kesselsteinverhindernde Polymermischung nach Anspruch 1, wobei das erste Monomer Acrylsäure, ein Salz davon oder eine konjugierte Base davon ist; das zweite Monomer 2-Acrylamido-2-methylpropansulfonsäure, ein Salz davon oder eine konjugierte Base davon ist.

6. Kesselsteinverhindernde Polymermischung nach Anspruch 5, wobei die Polymerzusammensetzung ein Terpolymer ist, das das erste, das zweite und das dritte Monomer umfasst und etwa 90 Mol-% bis etwa 98 Mol-% des ersten Monomers und etwa 0,01 Mol-% bis etwa 7 Mol-% des zweiten Monomers umfasst; oder wobei die Polymerzusammensetzung ein Tetrapolymer ist, das das erste, das zweite, das dritte und das vierte Monomer umfasst und etwa 90 Mol-% bis etwa 98 Mol-% des ersten Monomers und etwa 0,01 Mol-% bis etwa 8Mol-% des zweiten Monomers umfasst; oder wobei die Polymerzusammensetzung ein Pentapolymer ist, das das erste, das zweite, das dritte, das vierte und das fünfte Monomer umfasst und etwa 90 Mol-% bis etwa 97 Mol-% des ersten Monomers und etwa 1 Mol-% bis etwa 7 Mol-% des zweiten Monomers umfasst.

7. Verfahren zur Verhinderung von Kesselsteinausbildung in wasserhaltigen Systemen unter Verwendung der Polymerzusammensetzung nach Anspruch 1, wobei das Verfahren Folgendes umfasst:
Zugeben von etwa 0,05 ppm bis 1000 ppm einer Polymerzusammensetzung zu einer Wasserquelle, um eine kesselsteinverhindernde Polymermischung auszubilden, wobei die Polymerzusammensetzung Folgendes umfasst:
etwa 0,05 ppm bis etwa 200 ppm einer Polymerzusammensetzung, wobei die Polymerzusammensetzung Folgendes umfasst:
etwa 55 Mol-% bis etwa 99 Mol-% eines ersten Monomers, das einen Rest von Folgendem aufweist:

Acrylsäure, einem Salz davon oder einer konjugierten Base davon, Maleinsäure, einem Salz davon oder einer konjugierten Base davon, oder Methacrylsäure, einem Salz davon oder einer konjugierten Base davon;
etwa 0,01 Mol-% bis etwa 45 Mol-% eines zweiten Monomers, das einen Rest von Folgendem aufweist:

2-Acrylamido-2-methylpropansulfonsäure, einem Salz davon oder einer konjugierten Base davon, Maleinsäure, einem Salz davon oder einer konjugierten Base davon, Methacrylsäure, einem Salz davon oder einer konjugierten Base davon, Sulfostyrol, oder
einem Methallylsulfonat,
wobei sich das erste Monomer chemisch von dem zweiten Monomer unterscheidet,
etwa 0,01 Mol-% bis etwa 5 Mol-% eines dritten Monomers, wobei das dritte Monomer einen Rest von tert-Butylacrylamid umfasst,
optional etwa 0,01 Mol-% bis etwa 10 Mol-% eines vierten Monomers, wobei das vierte Monomer einen Rest umfasst, der sich chemisch von dem ersten Monomer, dem zweiten Monomer und dem dritten Monomer unterscheidet; und
optional etwa 0,01 Mol-% bis etwa 10 Mol-% eines fünften Monomers, wobei das fünfte Monomer einen Rest umfasst, der sich chemisch von dem ersten Monomer, dem zweiten Monomer, dem dritten Monomer und dem vierten Monomer unterscheidet; und
Anwenden der kesselsteinverhindernden Polymermischung in einem wasserhaltigen System.

8. Verfahren nach Anspruch 7, wobei die kesseslsteinverhindernde Polymermischung durch Zugeben von etwa 0,2 ppm bis etwa 50 ppm der Polymerzusammensetzung zu der Wasserquelle ausgebildet wird.

9. Verfahren nach Anspruch 7 oder 8, wobei das wasserhaltige System einen Kühlturm, einen Heizkörper, ein oder mehrere Rohre, einen Wassermantel, eine Entsalzungsmembran, einen Kondensator, einen Verdampfer, eine Pumpe und/oder einen Speicherbehälter beinhaltet.

10. Wasserhaltiges System, das eine kesselsteinverhindernde Polymermischung nach einem der Ansprüche 1-6 darin in einer Konzentration von etwa 0,1 ppm bis etwa 20 ppm beinhaltet.

11. Wasserhaltiges System nach Anspruch 10, wobei die kesselsteinverhindernde Polymermischung über 2 Konzentrationszyklen ohne beliebige Kesselsteinausbildung bereitstellt.

12. Verwendung der kesselsteinverhindernden Polymermischung nach einem der Ansprüche 1-6, um die Kesselsteinausbildung in einem wasserhaltigen System zu verhindern.

**Revendications**

1. Mélange polymère inhibiteur de tartre, comprenant :

une source d'eau comprenant 4 000 ppm à 350 000 ppm de solides dissous totaux ; et
environ 0,05 ppm à environ 200 ppm d'une composition polymère, la composition polymère comprenant :
environ 55 % en moles à environ 99 % en moles d'un premier monomère comprenant un résidu :

d'acide acrylique, d'un sel de celui-ci, ou d'une base conjuguée de celui-ci, ou
d'acide maléique, d'un sel de celui-ci, ou d'une base conjuguée de celui-ci, ou
d'acide méthacrylique, d'un sel de celui-ci ou d'une base conjuguée de celui-ci ;
environ 0,01 % en moles à environ 45 % en moles d'un deuxième monomère comprenant un résidu :

d'acide 2-acrylamido-2-méthylpropane sulfonique, d'un sel de celui-ci ou d'une base conjuguée de celui-ci, ou
d'acide maléique, d'un sel de celui-ci ou d'une base conjuguée de celui-ci, ou
d'acide méthacrylique, d'un sel de celui-ci ou d'une base conjuguée de celui-ci, ou
de sulfostyrène, ou
de sulfonate de méthallyle,
le premier monomère étant chimiquement différent du deuxième monomère,
environ 0,01 % en moles à environ 5 % en moles d'un troisième monomère, le troisième monomère comprenant un résidu de tert-butylacrylamide,
éventuellement environ 0,01 % en moles à environ 10 % en moles d'un quatrième monomère, le quatrième monomère comprenant un résidu qui est chimiquement différent du premier monomère, du deuxième monomère et du troisième monomère ; et
éventuellement environ 0,01 % en moles à environ 10 % en moles d'un cinquième monomère, le cinquième monomère comprenant un résidu qui est chimiquement différent du premier monomère, du deuxième monomère, du troisième monomère et du quatrième monomère.

2. Mélange polymère inhibiteur de tartre selon la revendication 1, dans lequel le premier monomère représente environ 85 % en moles à environ 97 % en moles de la composition polymère et le deuxième monomère représente environ 1 % en moles à environ 5 % en moles de la composition polymère.

3. Mélange polymère inhibiteur de tartre selon la revendication 1 ou la revendication 2, dans lequel :
le quatrième monomère est l'acide 2-acrylamido-2-méthylpropane sulfonique, ou l'acide itaconique, ou l'acide crotonique ou une base conjuguée de celui-ci, ou une molécule alkylée ou une base conjuguée de celle-ci, ou du diméthylacrylamide.

**4.** Mélange polymère inhibiteur de tartre selon l'une quelconque des revendications 1 à 3, dans lequel le cinquième monomère est l'acide acrylique, l'acide maléique, l'acide méthacrylique, l'acide itaconique ou l'acide crotonique.

**5.** Mélange polymère inhibiteur de tartre selon la revendication 1, dans lequel le premier monomère est l'acide acrylique, un sel de celui-ci ou une base conjuguée de celui-ci ; le deuxième monomère est l'acide 2-acrylamido-2-méthylpropane sulfonique, un sel de celui-ci ou une base conjuguée de celui-ci.

**6.** Mélange polymère inhibiteur de tartre selon la revendication 5, dans lequel la composition polymère est un terpolymère comprenant les premier, deuxième et troisième monomères et comprenant environ 90 % en moles à environ 98 % en moles du premier monomère et environ 0,01 % en moles à environ 7 % en moles du deuxième monomère ; ou dans lequel la composition polymère est un tétrapolymère comprenant les premier, deuxième, troisième et quatrième monomères et comprenant environ 90 % en moles à environ 98 % en moles du premier monomère et environ 0,01 % en moles à environ 8 % en moles du deuxième monomère ; ou dans lequel la composition polymère est un pentapolymère comprenant les premier, deuxième, troisième, quatrième et cinquième monomères et comprenant environ 90 % en moles à environ 97 % en moles du premier monomère et environ 1 % en moles à environ 7 % en moles du deuxième monomère.

**7.** Procédé destiné à l'inhibition de la formation de tartre dans des systèmes contenant de l'eau, à l'aide de la composition polymère selon la revendication 1, le procédé comprenant :
l'ajout d'environ 0,05 ppm à 1 000 ppm d'une composition polymère à une source d'eau pour former un mélange polymère inhibiteur de tartre, la composition polymère comprenant :
environ 0,05 ppm à environ 200 ppm d'une composition polymère, la composition polymère comprenant :
environ 55 % en moles à environ 99 % en moles d'un premier monomère comprenant un résidu :

  d'acide acrylique, d'un sel de celui-ci, ou d'une base conjuguée de celui-ci, ou
  d'acide maléique, d'un sel de celui-ci, ou d'une base conjuguée de celui-ci, ou
  d'acide méthacrylique, d'un sel de celui-ci ou d'une base conjuguée de celui-ci ;
  environ 0,01 % en moles à environ 45 % en moles d'un deuxième monomère comprenant un résidu :
  d'acide 2-acrylamido-2-méthylpropane sulfonique, d'un sel de celui-ci ou d'une base conjuguée de celui-ci, ou
  d'acide maléique, d'un sel de celui-ci ou d'une base conjuguée de celui-ci, ou
  d'acide méthacrylique, d'un sel de celui-ci ou d'une base conjuguée de celui-ci, ou
  de sulfostyrène, ou
  de sulfonate de méthallyle,
  le premier monomère étant chimiquement différent du deuxième monomère,
  environ 0,01 % en moles à environ 5 % en moles d'un troisième monomère, le troisième monomère comprenant un résidu de tert-butylacrylamide,
  éventuellement environ 0,01 % en moles à environ 10 % en moles d'un quatrième monomère, le quatrième monomère comprenant un résidu qui est chimiquement différent du premier monomère, du deuxième monomère et du troisième monomère ; et
  éventuellement environ 0,01 % en moles à environ 10 % en moles d'un cinquième monomère, le cinquième monomère comprenant un résidu qui est chimiquement différent du premier monomère, du deuxième monomère, du troisième monomère et du quatrième monomère ; et
  l'application du mélange polymère inhibiteur de tartre à un système contenant de l'eau.

**8.** Procédé selon la revendication 7, dans lequel le mélange polymère inhibiteur de tartre est formé en ajoutant environ 0,2 ppm à environ 50 ppm de la composition polymère à la source d'eau.

**9.** Procédé selon la revendication 7 ou 8, dans lequel le système contenant de l'eau comporte une tour de refroidissement, et/ou un radiateur, et/ou un ou plusieurs tuyaux, et/ou une chemise d'eau, et/ou une membrane de dessalement, et/ou un condenseur, et/ou un évaporateur, et/ou une pompe, et/ou un réservoir de stockage.

**10.** Système contenant de l'eau comportant un mélange polymère inhibiteur de tartre selon l'une quelconque des revendications 1 à 6 dans celui-ci en une concentration d'environ 0,1 ppm à environ 20 ppm.

**11.** Système contenant de l'eau selon la revendication 10, dans lequel le mélange polymère inhibiteur de tartre fournit plus de 2 cycles de concentration sans aucune formation de tartre.

**12.** Utilisation du mélange polymère inhibiteur de tartre selon l'une quelconque des revendications 1 à 6 pour inhiber la formation de tartre dans un système contenant de l'eau.

Comparison Of Working Examples With Benchmarks

——————— Benchmark 1

– – – – – Working Example 1

——————— Working Example 2

—–□——— Working Example 3

—— – —— Benchmark 2

——· —— Working Example 4

——————— Working Example 5

—○——— Working Example 6

——·——·— Working Example 7

—+—+—+— Working Example 8

*FIG. 1*

Concentrations Of Working Examples 3 And 6 In Real And Synthetic Seawater

— — — Working Example 3 in Seawater

– – – – – Working Example 6 In Seawater

— – — – — Working Example 3 In Synthetic Seawater

—□——— Working Example 6 in Synthetic Seawater

*FIG. 2*

**EP 3 328 800 B1**

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3928196 A
- US 2003173303 A1
- WO 2013019627 A1
- US 6645384 B1